# FASCICULE DE BREVET EUROPEEN

(11) **EP 2 349 924 B1**
(45) Date de publication et mention de la délivrance du brevet: **08.02.2017**
(21) Numéro de dépôt: 09760205.6
(22) Date de dépôt: 23.10.2009
(51) Int. Cl.: C01B 13/14, C01B 25/45, C01D 1/02, C01G 49/02, C01B 25/30, H01M 4/48

(54) **FLUOROSULFATES UTILES COMME MATERIAUX D'ELECTRODE**
FLUORSULFATE, DIE ALS ELEKTRODENMATERIALIEN VERWENDBAR SIND
FLUOROSULPHATES USEFUL AS ELECTRODE MATERIALS

(30) Priorité: 23.10.2008 FR 0805875; 28.05.2009 FR 0953529; 27.07.2009 FR 0955233
(43) Date de publication de la demande: 03.08.2011
(73) Titulaire: Centre National de la Recherche Scientifique, 75016 Paris (FR); Université de Picardie Jules Verne, 80039 Amiens (FR)
(72) Inventeur: TARASCON, Jean-Marie, F-91540 Mennecy (FR); RECHAM, Nadir, F-80000 Amiens (FR); ARMAND, Michel, F-75014 Paris (FR)
(74) Mandataire: Goulard, Sophie
(86) Numéro de dépôt international: PCT/FR2009/052040
(87) Numéro de publication internationale: WO 2010/046610

(56) Documents cités:
- DE-A1-102006 011 754
- LITTY ET AL: "Synthesis, crystal structure and lithium ion conductivity of LiMgFSO4" 5 décembre 2001 (2001-12-05), JOURNAL OF MATERIAL CHEMISTRY,, PAGE(S) 374 - 377 , XP002570175 cité dans la demande le document en entier
- BARKER ET AL: "A Symmetrical Lithium-Ion Cell Based on Lithium Vanadium Fluorophosphate, LiVPO4F" 15 avril 2005 (2005-04-15), ELECTROCHEMICAL AND SOLID-STATE LETTERS,, PAGE(S) A285 - A287 , XP002570176 le document en entier
- ROBERTS ANDREW C ET AL: "The x-ray crystallography of tavorite from the Tip Top pegmatite, Custer, South Dakota" POWDER DIFFRACTION, JCPDS-INTERNATIONAL CENTRE FOR DIFFRACTION DATA, WSARTHMORE, US, vol. 3, no. 2, 1 janvier 1988 (1988-01-01) , pages 93-95, XP009130207 ISSN: 0885-7156

## Description

La présente invention concerne un matériau fluoré utilisable comme matière active d'électrode, ainsi qu'un procédé pour son élaboration.

### L'ART ANTERIEUR

On connaît les batteries au lithium utilisant un composé d'insertion comme base de fonctionnement de l'électrode positive, tel que LiₓCoO₂, 0,4 ≤ x ≤ 1 qui est utilisé pur ou en solution solide avec le nickel et le manganèse et l'aluminium. Les principaux obstacles à la généralisation de ce type d'électrochimie sont la rareté du cobalt et le potentiel trop positif des oxydes de transition, avec pour conséquences des problèmes de sécurité pour la batterie.

On connaît aussi les composés LiₓT^{M}ₘZ_{y}P₁₋ₛSiₛO₄ (« oxyanions ») dans lesquels T^{M} est choisi parmi Fe, M et Co, et Z représente un ou plusieurs éléments qui ont une valence comprise entre 1 et 5 et qui peuvent se substituer dans les sites des métaux de transition ou du lithium. Ces composés n'échangent que le lithium, et ne présentent qu'une très faible conductivité électronique et ionique. Ces handicaps peuvent être surmontés par l'utilisation de très fines particules (telles que des nanoparticules) et par le dépôt d'un revêtement de carbone par pyrolyse de composés organiques. Les inconvénients associés à l'utilisation de nano-particules sont une compacité faible (« tap density ») qui se traduit par une perte d'énergie spécifique, et ce problème est encore aggravé par le dépôt de carbone. De plus, le dépôt de carbone s'effectue à haute température, dans des conditions réductrices. En pratique, il est difficile d'utiliser des éléments de transition autres que Fe^{II} et Mn^{II}, les éléments Co^{II} et Ni^{II} étant facilement réduits à l'état métallique. Il en est de même pour Fe^{III}, Mn^{III}, Cr^{III}, V^{III}, V^{IV} qui sont des dopants intéressants pour augmenter la conductivité ionique ou électronique.

D'autres composés ont été proposés, notamment des composés répondant à la formule générale AₐM_{b}(SO₄)_{c}Z_{d} dans laquelle A représente au moins un métal alcalin, Z représente au moins un élément choisi parmi F et OH, et M représente au moins un cation de métal divalent ou trivalent. L. Sebastian, et al., [J. Mater. Chem. 2002, 374-377] décrivent la préparation de LiMgSO₄F par voie céramique, ainsi que la structure cristallographique dudit composé qui est isotypique de la structure de la Tavorite LiFeOHPO₄. Les auteurs mentionnent la conduction ionique élevée de ce composé, et suggèrent que les composés LiMSO₄F dans lesquels M est Fe, Co ou Ni qui seraient isostructuraux semblent importants pour l'insertion/extraction redox de lithium impliquant des états d'oxydation M^{II}/M^{III}. Les auteurs précisent également que la préparation des composés de Fe, Ni ou Co par voie céramique est en cours, mais aucune publication postérieure sur ces composés n'a été faite.

En outre, US-2005/0163699 décrit la préparation par voie céramique des composés AₐM_{b}(SO₄)_{c}Z_{d} précités. La technique est illustrée par des exemples concrets concernant des composés dans lesquels M est Ni, Fe, Co, Mn, (MnMg), (FeZn), ou (FeCo). Ces composés sont préparés par voie céramique à partir de LiF précuseur de Li et du sulfate de l'élément ou des éléments M. Parmi ces composés, les plus intéressants sont les composés qui contiennent Fe, car outre leur coût relativement faible, ils sont susceptibles sur la base de considérations structurales et chimiques (notamment l'ionocovalence des liaisons) de présenter des propriétés électrochimiques intéressantes dans une gamme de potentiel souhaitable pour garantir une utilisation fiable pour des applications de grands volumes. Pour des raisons d'effet inductif, les sulfates devraient présenter des potentiels plus élevés que les phosphates, quelle que soit leur structure. Des exemples de préparation de composés contenant divers éléments métalliques sont décrits, mais aucune propriété électrochimique n'est rapportée. Ainsi l'exemple 2 décrit la préparation d'un composé LiFeSO₄F par une méthode céramique à 600°C qui donne un composé non homogène, puis 500°C où le composé est rouge noir, ou encore à 400°C dans l'air ou le composé est rouge. Cette méthode est suceptible de permettre la réduction du groupement SO₄²⁻ par Fe²⁺ en l'absence d'oxygène selon SO₄²⁻ + Fe²⁺⇒ SO₂ + 20²⁻ 2Fe³⁺. La couleur rouge constatée dans les composés obtenus aux différentes températures est due à l'association O²⁺/Fe³⁺ dans une maille cristalline tel que l'oxyde Fe₂O₃. Il est par ailleurs connu que les composés du Fe^{II} s'oxydent à l'air dès 200°C en donnant du Fe^{III}, et la préparation de l'exemple 2 à 400°C sous air le confirme. Les composés contenant du fer qui sont préparés par voie céramique à partir de LiF et de sulfate de fer selon US-2005/0163699 ne sont donc pas constitués par LiFeSO₄F. De même, il apparaît que les composés dans lesquels M est Co, Ni ne sont pas stables aux températures mises en oeuvre lors de la préparation préconisée par voie céramique. Il n'est donc pas plausible que les composés décrits dans US-2005/0163699 aient réellement été obtenus.

### L'INVENTION

Le but de la présente invention est de fournir un nouveau matériau d'électrode ayant une activité électrochimique améliorée proche de la capacité théorique (c'est-à-dire un matériau capable d'insérer un ion alcalin par unité d'oxyanion fluoré), ainsi qu'un procédé qui permet de produire ledit matériau de manière fiable, rapide et économique.

Le matériau de la présente invention est constitué de particules d'un fluorosulfate qui a une structure de type Tavorite distordue et qui répond à la formule (I) suivante:

(A₁₋ₐA'ₐ)ₓ(Z_{1-b}Z'_{b})_{z}(SO₄)ₛF_{f} (I)

dans laquelle :
- A représente Li ou Na ;
- A' représente une lacune ou au moins un élément dopant ;
- Z représente au moins un élément choisi parmi Fe, Co, et Ni ;
- Z' représente une lacune ou au moins un élément dopant ;
- les indices a, b, x, z, s, et f sont choisis de manière à assurer l'électroneutralité du composé, et a≥0, b≥0, x≥0, z>0, s>0, f>0 ;
- les quantités respectives a et b de dopant A et Z' sont telles que la structure de type Tavorite est préservée.

La structure tavorite comprend des octaèdres ZO₄F₂ centrés sur Z reliés par des fluor apicaux formant des chaînes le long de l'axe c. Les octaèdres ont tous des atomes F en position trans, mais ils se répartissent en deux types différents. Les chaînes sont reliées entre elles par des tétraèdres SO₄ isolés, créant ainsi une structure tri-dimensionnelle et délimitant des tunnels le long de l'axe [100], [010] et [101]. l'élément A₁₋ₐA'ₐ d'un composé (I) se logeant dans lesdits tunnels(diffusion 3D).

Lorsque A est Li, la structure de type Tavorite distordue du composé (I) a une maille triclinique groupe d'espace P-1. Lorsque A est Na, la structure de type Tavorite distordue du composé (I) a une maille monoclinique (P2₁/C).

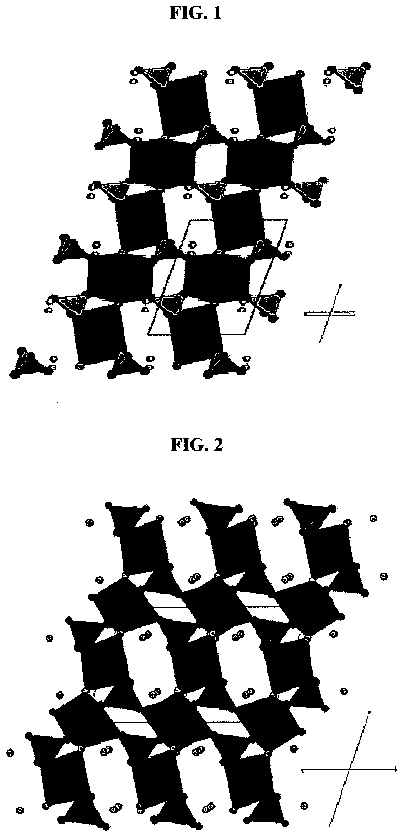

Les figures 1 et 2 sont des représentations schématiques respectivement de la structure de type Tavorite distordue à maille triclinique et à maille monoclinique.
La figure 3 est une vue comparative des mailles triclinique à gauche, monoclinique à droite.
La figure 4 représente l'image obtenue par SEM pour le matériau LiFeSO₄F de l'exemple 1.
La figure 5a représente l'image TEM, plus particulièrement le diagramme SAED correspondant, pour le matériau LiFeSO₄F de l'exemple 1 et la figure 5b représente le spectre EDS qui montre la présence de F. L'intensité est donnée en ordonnée (en unités arbitraires) en fonction de l'énergie E (en keV) en abscisse.
La figure 6 représente le diagramme de diffraction des rayons X et, sous forme d'un insert, la structure du matériau LiFeSO₄F de l'exemple 1.
La figure 7 représente le diagramme obtenu lors de la caractérisation par ATG couplée avec une spectrométrie de masse, du matériau LiFeSO₄F de l'exemple 1.
La figure 8 représente l'évolution du diagramme de diffraction des rayons X lors de l'augmentation de la température, pour un échantillon de LiFeSO₄F.
La figure 9 représente de diagramme de diffraction des rayons X pour le mélange FeSO₄ + LiF (fig. 9a) et pour le matériau obtenu après le traitement thermique (fig. 9b).
Les figures 10, 11, 12 et 13 représentent le diagramme de diffraction des rayons X du matériau LiFeSO₄F obtenu respectivement dans les exemples 2, 3, 4 et 5.
Les figures 14 et 15 représentent le diagramme de diffraction des rayons X et le diagramme obtenu lors de la caractérisation par ATG du matériau LiCoSO₄F de l'exemple 6.
La figure 16 représente l'évolution du diagramme de diffraction des rayons X lors de l'augmentation de la température, pour un échantillon de LiCoSO₄F.
Les figures 17 et 18 représentent respectivement le diagramme de diffraction des rayons X et le diagramme obtenu lors de la caractérisation par ATG du matériau LiNiSO₄F de l'exemple 7.
La figure 19 représente l'évolution du diagramme de diffraction des rayons X lors de l'augmentation de la température, pour un échantillon de LiNiSO₄F.
Les figures 20 et 21 représentent le diagramme de diffraction des rayons X respectivement du matériau Fe_{0,5}Mn_{0,5}SO₄.H₂O de l'exemple 8 du matériau NaFeSO₄F de l'exemple 9.
Les figures 22 et 23 représentent le diagramme de diffraction des rayons X du matériau LiFeSO₄F obtenu respectivement dans les exemples 10 et 11.
La figure 24 représente à gauche le diagramme de diffraction des rayons X du matériau LiFeSO₄F obtenu dans l'exemple 12 et à droite, une micrographie MEB dudit matériau.
Les figures 25, 26 et 27 représentent le diagramme de diffraction des rayons X respectivement du matériau NaFeSO₄F de l'exemple 13, du matériau NaCoSO₄F de l'exemple 14 et du matériau FeSO₄F de l'exemple 15.
Les figures 28a, b et c concernent plusieurs échantillons de LiFeSO₄F préparés selon l'exemple 3. La figure 28a représente la variation du potentiel (en V) en fonction du taux d'insertion x de lithium et (sous forme d'insert) la variation de la capacité C (en mAh/g) en fonction du nombre de cycles N à un régime de C/10. La figure 28b représente la variation du potentiel (en V) en fonction du taux d'insertion x de lithium à un régime de C/2. La figure 28c représente la variation de la capacité en fonction du régime R.
La figure 29 représente la variation du potentiel P (en V) en fonction du taux d'insertion x de lithium (courbe de gauche) et la variation de la capacité C (en mAh/g) en fonction du nombre de cycles N (courbe de droite) pour le matériau LiFeSO₄ de l'exemple 12.
La figure 30 représente la variation du potentiel P (en V) en fonction du taux d'insertion x de lithium pour le matériau NaFeSO₄F de l'exemple 13.

Sur tous les diagrammes de diffraction des rayons X, l'intensité I (en unités arbitraires) est donnée en ordonnée, et la longueur d'onde 2θ est donnée en abscisse.

Sur les diagrammes ATG, %TG indique la perte de poids en fonction de la température T (en °C), et éventuellement DSC indique la quantité d'énergie en (mW).

Un composé selon l'invention se présente sous la forme de grains dont la dimension est inférieure à 100 µm, voire inférieure à 100 nm.

Lorsque A' est un élément dopant, A' peut être un métal alcalin différent de A, un métal alcalino-terreux ou un métal 3d, en particulier Ti, V, Cr, Mn, Fe, Mn, Co ou Cu. De manière générale, la teneur "a" en dopant A' est de préférence inférieure à 0,25%, c'est-à-dire a<0,25.

Lorsque Z' est un élément dopant, Z' peut être un métal choisi parmi les métaux alcalins, Mn, Mg, Ca, Sc, Ti, V, Cr, Zn, Al, Ga, Sn, Zr, Nb et Ta dans au moins un de leurs degrés d'oxydation. De manière générale, la teneur "b" en dopant Z' est de préférence inférieure à 25%, c'est-à-dire b<0,25. Les dopants Z' particulièrement intéressants sont Mn, Mg, Zn, Ti, et Al.

Des composés selon l'invention particulièrement préférés sont ceux qui répondent aux formules Li(Z_{1-b}Z'_{b})SO₄F et Na(Z_{1-b}Z'_{b})_{z}SO₄F, en particulier LiFeSO₄F, LiCoSO₄F, LiNiSO₄F, et leurs solutions solides, NaFeSO₄F, NaCoSO₄F, NaNiSO₄F et leurs solutions solides, ainsi que les solutions solides Li(Z_{1-b}Mn_{b})SO₄F et Na(Z_{1-b}Mn_{b})SO₄F dans lesquels Z est Fe, Co ou Ni, b≤0,2.

Une catégorie particulière de composés (I) comprend les composés dans lesquels le groupe (Z_{1-b}Z'_{b}) représente plus d'un élément. Il s'agit de composés dans lesquels Z représente plus d'un élément choisi parmi Fe, Co et Ni, ainsi que de composés dans lesquels b ≠ 0, les deux cas pouvant se combiner.

Un composé (I) dans lequel x=0, c'est-à-dire un composé de formule (Z_{1-b}Z'_{b})_{z}(SO₄)ₛF_{f}, en particulier un composé ZSO₄F, plus particulièrement FeSO₄F est intéressant car il permet de construire des générateurs électrochimiques primaires à l'état chargé avec une anode de lithium et un électrolyte de type liquide ou gel, ou des générateurs secondaires en particulier avec des électrolytes polymères.

Un matériau (I) selon l'invention dans lequel x >0 peut être obtenu à partir des précurseurs des éléments qui le constituent, par voie céramique ou par voie ionothermale.

Le précurseur de A ou de A' peut être choisi parmi les sels d'acides inorganiques (tels que les carbonates et les hydrogéno-carbonates, les hydroxydes, les peroxydes, et les nitrates) ; les sels d'acides organiques volatils (tels que les acétates et les formates), les sels d'acides décomposables à chaud (tels que les oxalates, les malonates et les citrates), les fluorures, et les sulfates. Parmi de tels précurseurs, on préfère en particulier, Li₂CO₃, LiHCO₃, LiOH, Li₂O, Li₂O₂, LiNO₃, LiCH₃CO₂, LiCHO₂, Li₂C₂O₄, Li₃C₆H₅O₇, Na₂CO₃, NaOH, Na₂O₂, NaNO₃, NaCH₃CO₂, NaCHO₂, Na₂C₂O₄, Na₃C₆H₅O₇, et leurs hydrates. Les précurseurs de Li ou Na apportant au moins deux constituants du produit final tels que les fluorures et les sulfates sont particulièrement préférés, notamment LiF, NaF, LiHSO₄, et les sulfates Li₂SO₄, Na₂SO₄ et NaHSO₄ sous forme hydratée.

Le précurseur d'un élément Z ou Z' est choisi de préférence parmi les sulfates de Z ou de Z' qui présentent une structure de type Tavorite, et qui permettront l'obtention de la structure de type Tavorite du composé (I).

Lorsque les précurseurs de A, de A', de Z ou de Z' n'apportent pas d'élément F ou S ou une quantité insuffisante au regard de la stoechiométrie du composé (I) à préparer, on peut ajouter des précurseurs apportant uniquement un ou plusieurs éléments F ou S.

Les précurseurs de l'oxyanion SO₄²⁻ peuvent être choisis parmi l'acide H₂SO₄, et ses sels d'ammonium, d'amine, d'imidazole ou de pyridine thermolabiles tels que par exemple NH₄HSO₄, (NH₄)₂SO₄, (C₃H₅)HSO₄, (C₅H₆)₂SO₄, (C₃H₅)₂SO₄ et (C₅H₆)HSO₄.

Les précurseurs de S peut également être choisis parmi les sels de Mg ou Ca.. A titre d'exemple, on peut citer les composés A"(HSO₄)₂, et A"SO₄, A"HPO₄, et A"₂P₂O₇, A"(PO₃)₂ dans lesquels A" représente un métal alcalino-terreux (Mg, Ca).

Les précurseurs d'ion fluorure peuvent être choisis parmi les fluorures d'ammonium (NH₄F, nHF), d'imidazolium (C₃H₅N₂F, nHF) ou de pyridinium (C₅H₆NF, nHF) 0 ≤ n ≤ 5. Bien entendu, on peut utiliser plusieurs précurseurs pour le même élément.

Dans un mode de réalisation particulièrement préféré, le précurseur de Z et le cas échéant le précurseur de Z' sont choisis parmi les sulfates des éléments Z et/ou Z'. Le précurseur de A et le cas échéant le précurseur de A' sont choisis parmi les fluorures des éléments A et/ou A'. On utilise de préférence les sulfates sous forme d'hydrate, en particulier sous forme de monohydrate. Il a été constaté que, de manière surprenante, l'utilisation d'un précurseur sulfate monohydrate qui a une structure de type Tavorite distordue permet de conserver la structure de type Tavorite plus ou moins distordue lors de la réaction avec le fluorure.

La réaction est topotactique en raison de la filiation structurale entre ZSO₄.H₂O et les phases au Li et au Na correspondantes, basée sur le maintien de l'agencement général des tétraèdres SO₄ et d'octaèdres ZO₄F₂ dans la charpente structurale.

Le monohydrate ZSO₄.H₂O peut être obtenu à partir de Z SO₄.7H₂O soit par chauffage sous vide à une température entre 150°C et 450°C (par exemple 200°C), soit par chauffage dans un liquide ionique (par exemple 2 heures à 270°C dans EMI-TFSI).

Les composés (I) dans lesquels le groupe (Z_{1-b}Z'_{b}) représente plus d'un élément sont préparés de préférence en utilisant comme précurseur de Z et Z', une solution solide de sulfate, de préférence sous forme d'hydrate.

Dans un mode de réalisation particulier, un procédé visant à préparer un précurseur Fe_{1-b}Z'_{b}SO₄.H₂O comprend les étapes suivantes :
- dissolution de 1-b mole de FeSO₄.nH₂O et b mole de Z'SO₄.nH₂O dans de l'eau préalablement dégazée par l'argon ou l'azote pour éviter l'oxydation de Fe(II), b≤0,25 et n≤7 ;
- addition d'un alcool (par exemple l'éthanol ou l'isopropanol) pour provoquer la précipitation de Fe_{1-b}Z'_{b}SO₄, nH₂O ;
- récupération (par exemple par centrifugation) de la poudre qui s'est formée,
- lavage à l'alcool, puis chauffage à une température entre 150 et 250°C (par exemple à 200°C) sous vide pendant 1 heure.

La préparation d'un précurseur dans lequel Z représente Fe et Co ou Fe et Ni peut être effectuée de la même manière en choisissant CoSO₄.nH₂O ou NiSO₄.nH₂O pour Z'SO₄.nH₂O, b étant alors inférieur à 1.

Un composé de l'invention peut être obtenu par un procédé de synthèse à des températures inférieures à 330°C par voie ionothermale.

Le procédé par voie ionothermale comprend les étapes suivantes :
i) la dispersion desdits précurseurs dans un liquide support comprenant au moins un liquide ionique constitué d'un cation et d'un anion dont les charges électriques s'équilibrent, pour obtenir une suspension desdits précurseurs dans ledit liquide,
ii) le chauffage de ladite suspension à une température de 25 à 330°C,
iii) la séparation dudit liquide ionique et de l'oxyde inorganique de formule (I) issu de la réaction entre lesdits précurseurs.

Le précurseur sulfate monohydrate peut être préparé au préalable, ou préparé in situ dans le liquide ionique, au cours d'une étape préliminaire.

Par liquide ionique, on entend un composé qui ne contient que des anions et des cations qui compensent leur charges, et qui est liquide à la température de la réaction de formation des composés de l'invention, soit pur, soit en mélange avec un additif.

La quantité de précurseurs présente au sein du liquide ionique lors de l'étape i) est de préférence de 0,01 % à 85 % en masse, et plus préférentiellement de 5 à 60 % en masse.

Les quantités respectives des différents précurseurs dépendent de la stoechiométrie du composé (I) à préparer. Leur détermination est à la portée de l'homme de métier, puisque les réactions sont stoechiométriques. On utilise de préférence un excès de fluorure, de préférence de l'ordre de 5 à 25%.

Selon une forme de réalisation préférée de l'invention, le cation du liquide ionique est choisi parmi les cations de formules suivantes :

| | | | |
|---|---|---|---|
| 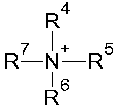 | 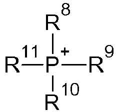 | 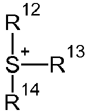 | 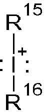 |
| ammonium | phosphonium | sulfonium | iodonium |
| 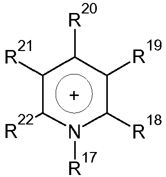 | 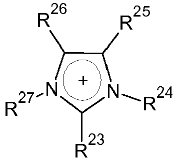 | 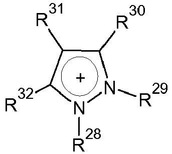 | 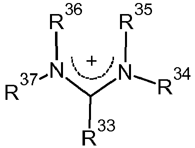 |
| pyridinium | imidazolium | pyrazolium | acétamidinium |
| 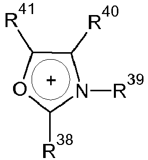 | 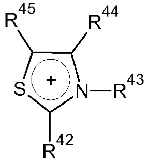 | 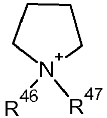 | 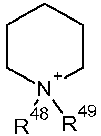 |
| oxazolium | thiazolium | pyrrolidinium | pipéridinium |
| 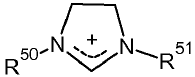 | 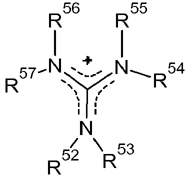 | | |
| imidazolinium | guanidinium | | |

dans lesquelles :
- les radicaux R⁴-R⁷, R¹⁷, R²⁷ , R²⁴, R²⁸, R²⁹, R³⁷, R³⁴, R³⁹, R⁴³ et R⁴⁶ à R⁵⁷, indépendamment les uns des autres, représentent un radical alkyle en C₁-C₂₄, arylalkyle en C₁-C₂₄ ou alkyl(C₁-C₂₄)aryle ;
- les radicaux R⁸-R¹⁶ ont la signification donnée pour R⁴ ou ils représentent chacun un radical alkyl(C₁-C₂₀)aryle ou un groupement NR⁶³R⁶⁴;
- les radicaux R¹⁸ à R²², R²³, R²⁵, R²⁶, R³⁰ à R³³ R³⁵, R³⁶, R³⁸, R⁴⁰ à R⁴² R⁴⁴ et R⁴⁵ représentent un atome d'hydrogène, un radical alkyle en C₁-C₂₄, aryle, oxaalkyle en C₁-C₂₄ ou un radical -[(CH)₂]ₙQ dans lequel Q représente -OH, -CN, -C(=O)OR⁵⁸, -C(=O)NR⁵⁹R⁶⁰, -NR⁶¹R⁶² -CH(OH)CH₂OH, ou bien un radical 1-imidazoyle, 3-imidazoyle ou 4-imidazoyle, et 0 ≤ n ≤ 12 ;
- R⁵⁸ à R⁶⁴, indépendamment les uns des autres, représentent un atome d'hydrogène, un radical alkyle en C₁-C₂₀, aryle ou oxaalkyle en C₁-C₂₀.

On préfère tout particulièrement les cations imidazolium dans lesquels R²³ = H ou CH₃, R²⁴ = CH₃, R²⁵ = R²⁶ = H, et R²⁷ = C₂H₅, C₃H₇, C₄H₉, C₅H₁₁, C₆H₁₃, C₈H₁₇, (CH₂)₃OH, (CH₂)₃CN, (CH₂)₄OH, ou (CH₂)₄CN, et les cations imidazolium dans lesquels R²³ = H ou CH₃, R²⁴ = C₄H₉, R²⁵ = R²⁶ = H, R²⁷ = (CH₂)₂OH, (CH₂)₂CN, (CH₂)₃OH, (CH₂)₃CN, (CH₂)₄OH, (CH₂)₄CN, ou CH₂CH(OH)CH₂OH.

L'anion d'un liquide ionique est choisi de préférence parmi Cl, Br, I, RSO₃⁻, ROSO₃⁻, [RPO₂]⁻, [R(R'O)PO₂]⁻, [(RO)₂PO₂]⁻, BF₄⁻, R_{f}BF₃⁻, PF₆⁻, R_{f}PF₅⁻, (R_{f})₂PF₄⁻, (R_{f})₃PF₃⁻, R_{f}CO₂^{-,} R_{f}SO₃⁻, [(R_{f}SO₂)₂N]⁻, [(R_{f}SO₂)₂CH]⁻, [(R_{f}SO₂)₂C(CN)]⁻, [R_{f}SO₂C(CN)₂]⁻, [(R_{f}SO₂)₃C]⁻, N(CN)₂⁻, C(CN)₃⁻, [(C₂O₄)₂B]⁻ dans lesquelS :
- R et R', identiques ou différents, représentent chacun un radical alkyle en C₁-C₂₄, aryle ou alkyl(C₁-C₂₄)aryle,
- R_{f} est un radical fluoré choisi parmi CₙF₂ₙ₊₁ dans lequel 0 ≤ n ≤ 8, CF₃OCF₂, HCF₂CF₂ et C₆F₅.

Lorsque le cation du liquide ionique est un cation imidazolium, il est souhaitable que le carbone en C2 du cation imidazolium soit protégé par un groupement alkyle, ayant de préférence de 1 à 4 atomes de carbone, du fait que le précurseur de l'élément A est un fluorure. A défaut, le proton acide porté par le carbone en C2 provoquerait la décomposition du cation du liquide ionique.

Un liquide ionique ayant un caractère hydrophobe élevé favorise la réaction entre le précurseur de A (AF) et le précuseur ZSO₄ hydraté. Il permet d'effectuer la synthèse dans un réacteur ouvert. Un liquide ionique hydrophile est moins favorable, et il nécessite d'effectuer la synthèse dans un réacteur fermé sous pression.

Le trifluorométhanesulfonate de 1-butyl-3-méthylimidazolium (BMI-triflate), et le bis-(trifluorométhanesulfonyl)imide de 1-éthyl-3-méthylimidazolium (EMI-TFSI) sont particulièrement préférés. EMI-TFSI qui est plus hydrophobe que BMI-triflate, est particulièrement préféré.

Selon un mode de réalisation préféré de l'invention, la température de chauffage de la suspension lors de l'étape ii) est comprise entre 100°C et 330°C, et encore plus préférentiellement entre 150 et 280°C.

L'étape ii) de chauffage est effectuée de préférence sous atmosphère inerte, à la pression atmosphérique. En effet, un des avantages importants du procédé conforme à l'invention est de ne pas requérir d'enceinte sous pression du fait de l'absence de volatilité du ou des liquides ioniques.

Le chauffage peut être effectué par divers moyens, notamment par chauffage dans un four, ou par chauffage par micro-ondes. Il peut être effectué en continu, dans une enceinte chauffée et dans laquelle circulent le liquide ionique et les précurseurs du composé (I), avec un temps de résidence permettant à la réaction d'être totale.

La durée de l'étape ii) de chauffage varie généralement de 10 minutes à 200 heures, préférentiellement de 3 à 48 heures.

La séparation composé (I) lors de l'étape iii) peut être réalisée par toute technique connue de l'homme du métier telle que par exemple par extraction par un solvant du liquide ionique ou par centrifugation, et élimination des éventuels sous-produits par un alcool, un nitrile, une cétone, un chloroalcane ayant de 1 à 6 atomes de carbone.

A la fin de la synthèse, le composé (I) peut être lavé, avec un solvant organique tel que par exemple l'acétone, l'acétonitrile, l'acétate d'éthyle, puis utilisé sans purification supplémentaire.

Egalement à la fin de la synthèse, le liquide ionique peut être récupéré éventuellement dilué par le dichlorométhane, le chloroforme, le dichloroéthane, la méthyl-éthyl-cétone, une pentanones, les esters dont l'acétate d'éthyle, le formiate d'éthyle et lavé, de préférence par de l'eau et/ou une solution acide telle que par exemple une solution aqueuse d'acide chlorhydrique, d'acide sulfurique ou d'acide sulfamique. Après lavage, et séchage (par exemple au Rotavapor®) ou sous vide primaire, le liquide ionique peut ainsi être réutilisé pour une nouvelle synthèse, ce qui est très avantageux d'un point de vue économique.

Le procédé de préparation d'un matériau (I) par voie céramique met en oeuvre les mêmes précurseurs que le procédé par voie ionothermale. Il consiste à mettre en contact des poudres de précurseurs et à soumettre le mélange à un traitement thermique. Il est caractérisé en ce que :
- les éléments SO₄, Z et le cas échéant Z' sont apportés par un précurseur unique sous forme de sulfate hydraté ;
- les éléments F, A et le cas échéant A' sont apportés chacun par un fluorure ;
- le traitement thermique est effectué dans un réacteur fermé.

Le sulfate hydrate est de préférence sous forme de monohydrate précurseur (Z_{1-b}Z'_{b})SO₄,H₂O.

Les précurseurs sont utilisés en quantités stoechiométriques, ou avec un excès de fluorure de préférence de l'ordre de 5 à 25%.

Le mélange de poudre est de préférence pastillé par compression avant d'être introduit dans le réacteur.

Le traitement thermique est effectué dans des conditions de température et de pression qui dépendent du volume du réacteur (en acier ou en quartz par exemple) et de la quantité de précurseurs introduite dans le réacteur. La proportion de phase tavorite et de phases parasites dépend du rapport "masse de précurseurs traitée/volume du réacteur fermé". Il est noté qu'un confinement plus élevé favorise l'obtention d'une phase unique tavorite. La détermination des conditions propres à chaque cas particulier est à la portée de l'homme de métier.

Un matériau (I) selon l'invention dans lequel x=0, par exemple le composé FeSO₄F, peut être obtenu par oxydation électrochimique ou par oxydation chimique de LiFeSO₄F en présence de NO₂BF₄ ou (CF₃CO₂)₂ICC₆H₅. Il a une structure triclinique, groupe d'espace P-1 avec les paramètres de maille suivants a= 5.0683(7) (Å), b= 5.0649(19) (Å), c= 7.2552(19) (Å), α =69,36(3), β = 68,80(3), γ = 88,16(2), and V =161.52(8) (Å³).

Un composé (I) peut être utilisé dans diverses applications en fonction des éléments qui le constituent. A titre d'exemple, les composés (I) de l'invention peuvent être utilisés comme matière active pour la fabrication d'électrodes dans les batteries et les systèmes électrochromes, comme céramiques, comme matériaux magnétiques pour le stockage l'information, comme pigment, ou dans une cellule photovoltaïque comme matériau absorbant la lumière avec un meilleur résultat que celui obtenu à l'aide de TiO₂ classiquement utilisé.

Lorsqu'un composé selon l'invention est utilisé comme matériau d'électrode, l'électrode peut être préparée en déposant sur un collecteur de courant, un matériau composite obtenu en mélangeant par broyage manuel ou par broyage mécanique (par exemple par un broyage d'environ 10 minutes à l'aide d'un broyeur SPEX 1800), un mélange comprenant un composé de l'invention et du carbone. Le pourcentage en poids de composé (I) par rapport au matériau composite "composé (I) + carbone" peut-être de 50 à 99%, plus particulièrement de 80 à 95%.

Le matériau composite utilisé pour l'élaboration d'une électrode peut contenir en outre un composé additionnel, le rapport en poids composé (I)/composé additionnel étant supérieur à 5%. Le composé additionnel peut être par exemple un matériau à structure olivine tel qu'un matériau LiMPO₄ dans lequel M représente au moins l'un des éléments Fe, Co et Ni, ou un oxyde LiCoO₂ ou LiNiO₂.

La quantité de matériau déposée sur le collecteur de courant est de préférence telle que la quantité de composé selon l'invention soit comprise entre 0,1 et 200, de préférence de 1 à 50 mg par cm². Le collecteur de courant peut être constitué par une grille ou une feuille d'aluminium, de titane, de papier de graphite ou d'acier inoxydable.

Une électrode selon l'invention peut être utilisée dans une cellule électrochimique comprenant une électrode positive et une électrode négative séparées par un électrolyte. L'électrode selon l'invention constitue l'électrode positive.

L'électrode négative peut être constituée par du lithium métallique ou par l'un de ses alliages, par un oxyde de métal de transition formant par réduction une dispersion nanométrique dans de l'oxyde de lithium, ou par un nitrure double de lithium et d'un métal de transition. L'électrode négative peut en outre être constituée par un matériau capable d'insérer de manière réversible des ions Li⁺ à des potentiels inférieurs à 1,6 V. Comme exemples de tels matériaux, on peut citer les oxydes à bas potentiel ayant pour formule générale Li_{1+y+x/3}Ti_{2-x/3}O₄ (0 ≤ x ≤ 1, 0 ≤ y ≤ 1), Li_{4+x'}Ti₅O₁₂0 ≤ x' ≤ 3, le carbone et les produit carbonés issus de la pyrolyse de matières organiques, ainsi que les dicarboxylates.

L'électrolyte comprend avantageusement au moins un sel de lithium ou de sodium en solution dans un solvant liquide aprotique polaire, dans un polymère solvatant éventuellement plastifié par un solvant liquide ou un liquide ionique, ou dans un gel constitué par un solvant liquide gélifié par addition d'un polymère solvatant ou non solvatant.

La présente invention est illustrée par les exemples de réalisation suivants, auxquels elle n'est cependant pas limitée.

Sauf mention contraire, FeSO₄.H₂O a été préparé à partir de FeSO₄.7H₂O par chauffage sous vide à 200°C, ou par chauffage de FeSO₄.7H₂O dans le liquide ionique EMI-TFSI à 250°C pendant 2 heures.

### Exemple 1

Dans une étape préliminaire, on a soumis FeSO₄.7H₂O a un traitement thermique dans EMI-TFSI à 250°C pendant 10 h, puis a 280°C pendant 24 h. Le monohydrate FeSO₄.H₂O formé est récupéré par centrifugation, lavé à l'acétate d'éthyle puis et séchage sous vide à 100°C.

On a mélangé 0,85 g de FeSO₄.H₂O ainsi obtenu et 0,148 g de LiF (rapport molaire 1/1,14) dans un mortier, on a introduit le mélange dans une bombe Parr® et on a ajouté 5 mL de bis(trifluorométhanesulfonyl) imidure d'éthyl-méthyl-imidazolium (EMI-TFSI). On a agité pendant 20 min à température ambiante, on a laissé décanter pendant 2 h, puis on a chauffé à 300°C pendant deux heures, dans la bombe ouverte, sans agitation.

Après refroidissement du mélange réactionnel jusqu'à la température ambiante, on a séparé la poudre obtenue par centrifugation, on l'a lavée 3 fois avec 20 mL de dichlorométhane, puis on l'a séchée à l'étuve à 60°C.

Le produit obtenu se présente sous forme d'une poudre couleur vert pâle. Il a été soumis à diverses analyses.

### Analyse SEM

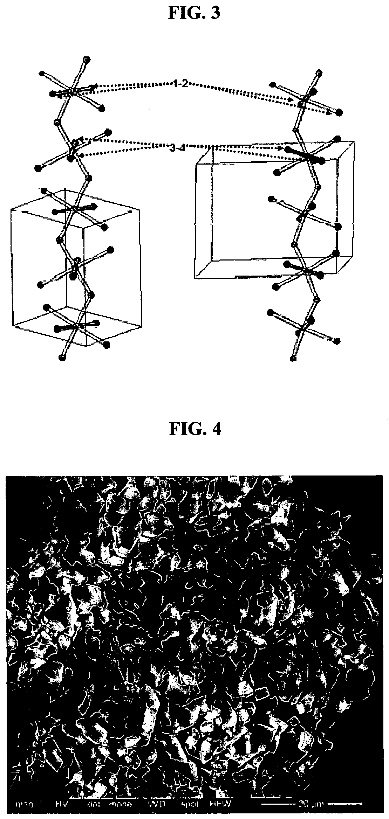

La figure 4 représente l'image obtenue par SEM et montre que la poudre est sous forme d'agglomérats constitués par des particules micrométriques.

### Analyse TEM

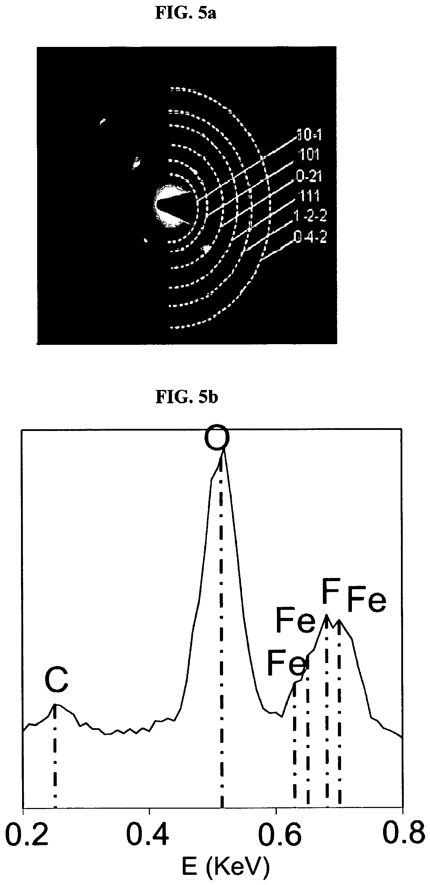

La figure 5a représente l'image TEM, plus particulièrement le diagramme SAED correspondant, et elle montre que les particules sont constituées par de nombreux cristallites. La figure 5b représente le spectre EDS qui montre la présence de F. L'intensité est donnée en ordonnée (en unités arbitraires) en fonction de l'énergie E (en keV) en abscisse.

### Diffraction des rayons X

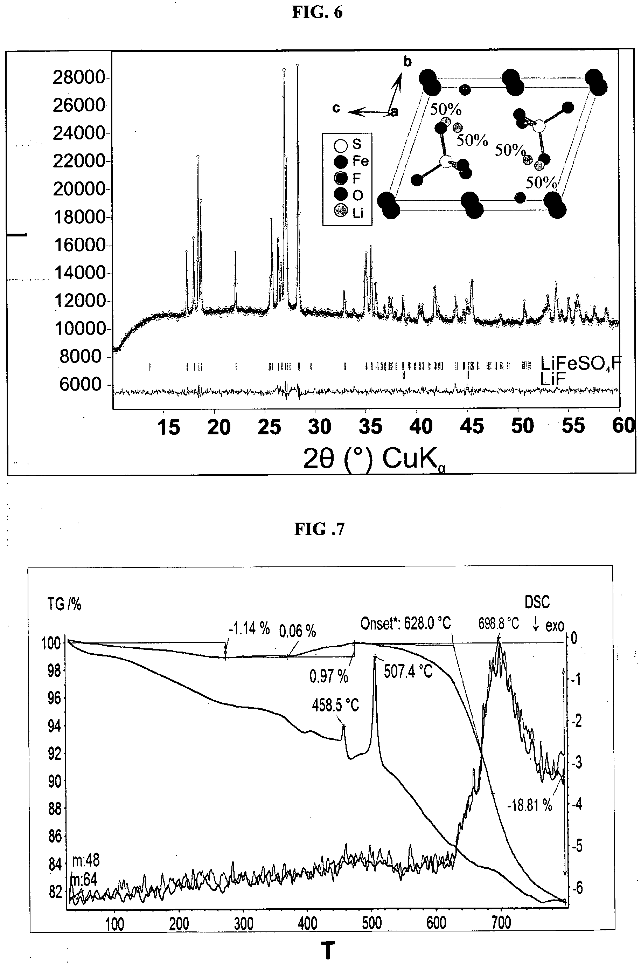

La figure 6 représente le diagramme de diffraction des rayons X et, sous forme d'un insert, la structure du compose obtenu. Cette structure comprend des d'octaèdres indépendants FeO₄F₂ (notés "2"), des tétraèdres SO₄ (notés "1") avec des tunnels dans lesquelles se trouvent les ions Li⁺ (notés "3").

### Analyse thermogravimétrique (ATG)

La figure 7 représente le diagramme obtenu lors de la caractérisation du composé par ATG couplé avec une spectrométrie de masse. L a courbe supérieure (qui porte les mentions -1.14%, 0.07%, ...) correspond à l'analyse ATG, la courbe médiane (qui porte les mentions 458.5°C et 507.4°C) correspond à la calorimétrie différentielle à balayage (DSC), et la courbe inférieure (portant les mentions m48 et m64) correspond à la spectrométrie de masse. Ces courbes montrent qu'une perte de poids de 23,41% se produit entre 400°C et 700°C, correspondant à un départ de SO₂ qui sous l'impact électronique dans les spectromètres de masse se fragmente partiellement en SO. Les accidents dans la courbe ATG et DSC pour des températures supérieures à 350°C indiquent le début d'instabilité thermique du composé.

Les analyses DSC et ATG montrent ainsi qu'il n'est pas possible d'obtenir LiFeSO₄F par un procédé par voie céramique effectué à des températures supérieures à 400°C tel que décrit dans US-2005/0163699.

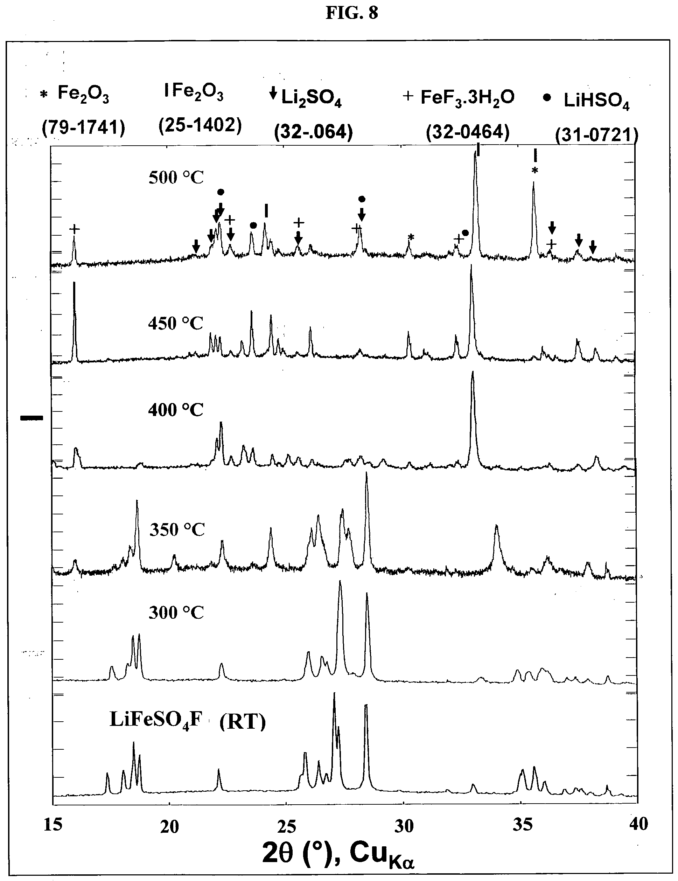

Pour confirmer ce fait, un échantillon du produit obtenu dans le présent exemple a été chauffé à l'air pendant 30 minutes comme dans US-2005/0163699.La figure 8 représente l'évolution du diagramme de diffraction des rayons X lors de l'augmentation de la température. RT désigne la température ambiante. Les raies visibles à 500°C sont attribuées aux composés existant à cette température, en référence aux numéros des Fiches JCPDS correspondant aux matériaux identifiés) comme suit :
* Fe₂O₃ (79-1741)
| Fe₂O₃ (25-1402)
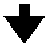 Li₂SO₄ (32-064) + FeF₃.3H₂O (32-0464)
● LiHSO₄ (31-0721)

### Exemple 1 comparatif

On a préparé un mélange équimolaire de FeSO₄ anhydre et de LiF et on l'a chauffé sous air à 450°C pendant 15 minutes.

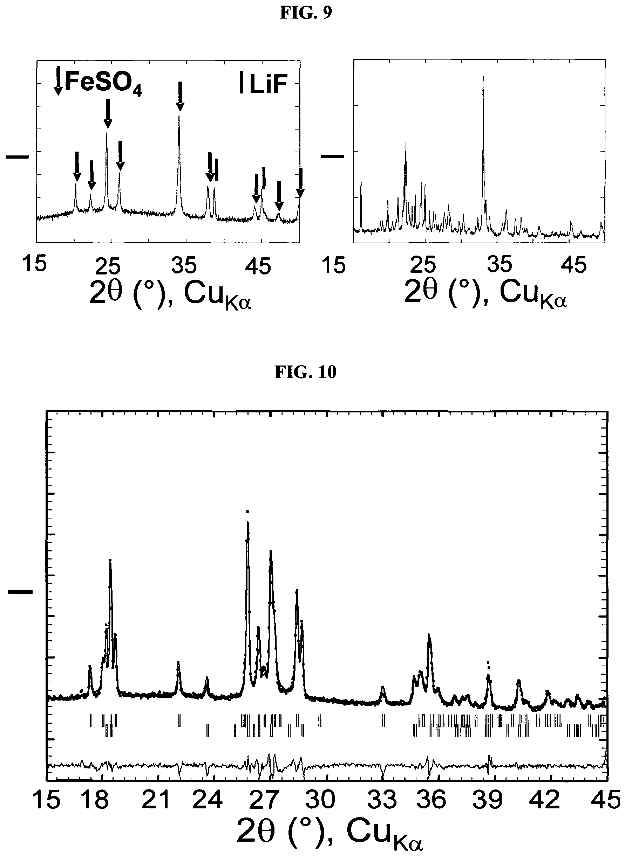

La figure 9 représente de diagramme de diffraction des rayons X pour le mélange de réactifs de départ (fig. 9a) et pour le produit obtenu après le traitement thermique à 450°C pendant 15 min (fig. 9b). Les pics qui correspondent respectivement à FeSO₄ et à LiF sont visibles sur la figure 9a, alors que la figure 9b montre des pics correspondant respectivement à LiF, Li₂SO₄, Fe₂O₃ et Li₂S₂O₇.

Cet exemple confirme que le traitement par voie céramique d'un mélange de précurseur de Fe et de S, et d'un précurseur de F ne donne pas le composé LiFeSO₄F dans les conditions décrites dans US-2005/0163699.

### Exemple 2

### Synthèse de LiFeSO₄F à partir de FeSO₄.7H₂O et LiF dans EMI-TFSI

Dans un flacon en PTFE contenant 3 ml de bis(trifluorométhane-sulfonyl)imide de 1-éthyl-3-méthylimidazolium (EMI-TFSI), on a introduit un mélange de 1,404 g de FeSO₄.7H₂O et 0,149 g de LiF préparé dans un mortier, on a soumis le mélange à une agitation magnétique pendant 20 minutes à température ambiante, on a arrêté l'agitation, puis on a ajouté 2 ml de liquide ionique (EMI-TFSI), et on a maintenu le mélange sans agitation à température ambiante pendant 30 minutes. L'ensemble a ensuite été introduit dans un four à 200°C, la température du four a été augmentée de 10°C toutes les 20 minutes jusqu'à 275°C, maintenue à cette valeur pendant 12 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

L'affinement du spectre de diffraction des rayons X réalisé avec une cathode de cuivre (représenté sur la figure 10) montre la présence de deux phases LiFeSO₄F et FeSO₄.H₂O dans des proportions équivalen.

### Phase 1 : LiFeSO₄F

Triclinique, groupe d'espace : P -1 (2)
A = 5,1819(5) Å, b = 5,4853(4) Å, c = 7,2297(4) Å,
α = 106,4564(3) °, β = 107,134(6) °, γ = 97,922(5) °
V = 182,761(4) Å³_{.}

### Phase 2 : FeSO₄.H₂O

Triclinique, groupe d'espace : P -1 (2)
A = 5,178(7) Å, b = 5,176(7) Å, c = 7,599(7) Å;
α = 107,58(6) °, β = 107,58(8) °, γ= 93,34(6) °
V = 182,56(4) Å³.

### Exemple 3

### Synthèse de LiFeSO₄F à partir de FeSO₄.H₂O et LiF dans EMI-TFSI

Dans un flacon en PTFE contenant 3 ml de bis(trifluorométhanesulfonyl)-imide de 1-éthyl-3-méthylimidazolium (EMI-TFSI), on a introduit un mélange de 0,85 g de FeSO₄.H₂O et 0,149 g de LiF (rapport molaire 1/1,14) préparé dans un mortier, on a soumis le mélange à une agitation magnétique pendant 20 minutes à température ambiante, on a arrêté l'agitation, puis on a ajouté 2 ml de liquide ionique (EMI-TFSI), et on a maintenu le mélange sans agitation à température ambiante pendant 30 minutes. L'ensemble a ensuite été introduit dans un four à 200°C, la température du four a été augmentée de 10°C toutes les 20 minutes jusqu'à 275°C, maintenue à cette valeur pendant 12 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

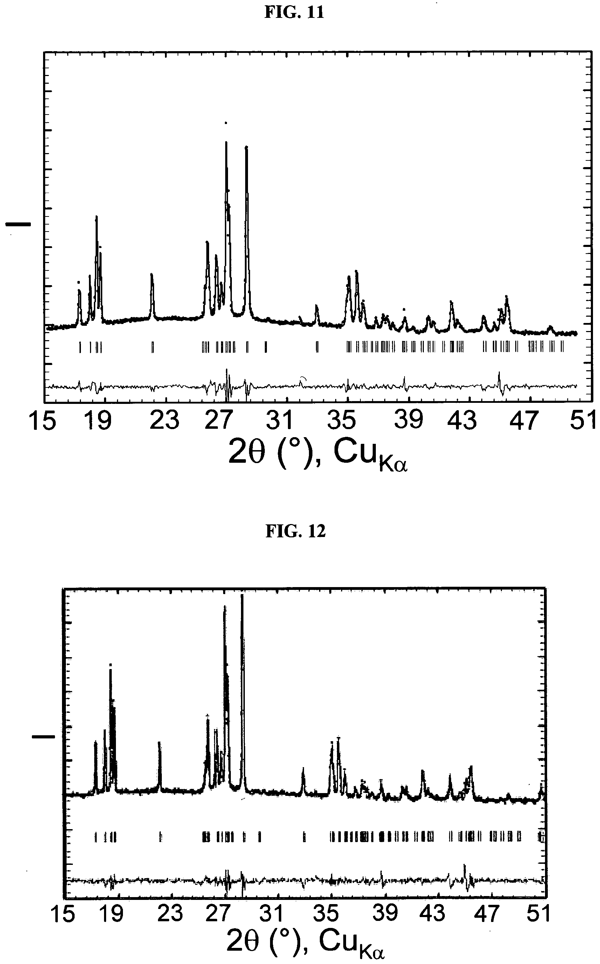

L'affinement du spectre de diffraction des rayons X réalisé avec une cathode de cuivre (représenté sur la figure 11) montre la présence d'une phase unique LiFeSO₄F, dont les paramètres de maille sont comme suit :
Triclinique, groupe d'espace : P -1 (2)
   a = 5,1827(7) Å, b = 5,4946(6) Å, c = 7,2285(7) Å,
   α = 106,535(7) °, β = 107,187(6) °, γ= 97,876(5) °
   V = 182,95(4) Å³.

La comparaison des exemples 2 et 3 montre que l'utilisation d'un sulfate monohydrate est plus favorable que l'utilisation d'un sulfate heptahydrate, dans la mesure où le premier cité permet d'obtenir une phase unique, alors que le second donne un mélange.

### Exemple 4

### Synthèse de LiFeSO₄F à partir de FeSO₄.H₂O et LiF

La synthèse de LiFeSO₄F est réalisée par voie ionothermale dans un autoclave à 280°C.

Dans un autoclave contenant 3 ml de bis(trifluorométhanesulfonyl)imide de 1-éthyl-3-méthylimidazolium (EMI-TFSI), on a introduit un mélange de 0,85 g de FeSO₄.H₂O et 0,149 g de LiF (rapport molaire 1/1,14) préparé dans un mortier, on a soumis le mélange à une agitation magnétique pendant 30 minutes à température ambiante, on a arrêté l'agitation, puis on a ajouté 2 ml de liquide ionique (EMI-TFSI), et on a maintenu le mélange sans agitation à température ambiante pendant 30 minutes. Après fermeture de l'autoclave sous argon, l'ensemble a été introduit dans un four à 200°C, la température du four a été augmentée de 10°C toutes les 20 minutes jusqu'à 280°C, maintenue à cette valeur pendant 48 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

Le produit obtenu se présente sous forme d'une poudre blanchâtre. La couleur légèrement différente de celle de l'échantillon de l'exemple 1 dénote une aptitude à la non stoechiométrie des phases, suivant les conditions opératoires.

L'affinement du spectre de diffraction des rayons X réalisé avec une cathode de cuivre (représenté sur la figure 12) montre la présence d'une phase unique LiFeSO₄F, dont les paramètres de maille sont comme suit :
Triclinique, groupe d'espace : P -1 (2)
   a = 5,1782(4) Å, b = 5,4972(4) Å, c = 7,2252(4) Å,
   α = 106,537(4) °, β = 107,221(4) °, γ= 97,788(3) °
   V = 182,82(4) Å³_{.}

### Exemple 5

### Synthèse de LiFeSO₄F à partir de FeSO₄.H₂O et LiF dans le 1-butyl-3-méthylimidazolium trifluorométhanesulfonate (triflate)

La synthèse de LiFeSO₄F est réalisée par voie ionothermale dans un autoclave à 270°C.

Dans un autoclave contenant 3 ml de trifluorométhanesulfonate de 1-butyl-3-méthylimidazolium (triflate), on a introduit un mélange de 0,85 g de FeSO₄.H₂O et 0,149 g de LiF (rapport molaire 1/1,14) préparé dans un mortier, on a soumis le mélange à une agitation magnétique pendant 30 minutes à température ambiante, on a arrêté l'agitation, puis on a ajouté 2 ml de liquide ionique EMI-Tf et on a maintenu le mélange sans agitation à température ambiante pendant 30 minutes. Après fermeture de l'autoclave sous argon, l'ensemble a été introduit dans un four à 200°C, la température du four a été augmentée de 10°C toutes les 20 minutes jusqu'à 270°C, maintenue à cette valeur pendant 48 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

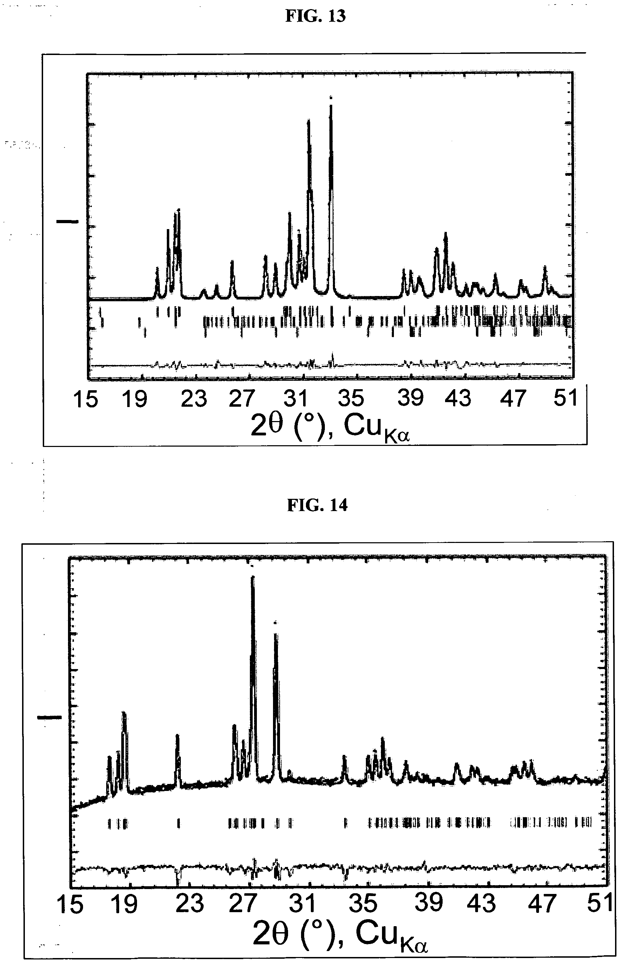

L'affinement du spectre de diffraction des rayons X réalisé avec une cathode de cobalt (représenté sur la figure 13) montre la présence d'une phase LiFeSO₄F (représentant environ 50% en masse), et de deux phases "FeSO₄ anhydre".
Phase 1 : LiFeSO₄F, Triclinique, groupe d'espace P -1 (2)
Phase 2 : orthorhombique, groupe d'espace Cmcm (63)
Phase 3 : orthorhombique, groupe d'espace Pbnm (62)

La comparaison des exemples 4 et 5 montre que l'utilisation d'un liquide ionique hydrophobe est plus favorable que l'utilisation d'un liquide ionique hydrophile, dans la mesure où le premier cité permet d'obtenir une phase unique, alors que le second donne un mélange.

### Exemple 6

### Synthèse de LiCoSO₄F à partir de CoSO₄.H₂O et LiF dans l'EMI-TFSI

Le précurseur CoSO₄.H₂O utilisé a été préparé à partir de CoSO₄.7H₂O par chauffage sous vide à 160°C pendant 2 heures.

Dans un flacon en PTFE contenant 5 ml de bis(trifluorométhanesulfonyl)-imide de 1-éthyl-3-méthylimidazolium (EMI-TFSI), on a introduit un mélange de 0,86 g de CoSO₄.H₂O et 0,149 g de LiF (rapport molaire 1/1,13) préparé dans un mortier, on a soumis le mélange à une agitation magnétique pendant 20 minutes à température ambiante, et on a arrêté l'agitation. Le flacon a ensuite été fermé sous argon, et on a maintenu le mélange réactionnel sans agitation à température ambiante pendant 30 minutes. L'ensemble a ensuite été introduit dans un four à 250°C, la température du four a été augmentée de 5°C toutes les 10 minutes jusqu'à 275°C, maintenue à cette valeur pendant 36 heures, puis on a laissé refroidir lentement.

La poudre qui s'est formée au cours du traitement thermique a été séparée du liquide ionique par centrifugation, lavée 3 fois avec 10 ml d'acétate d'éthyle, puis séchée à l'étuve à 60°C.

L'affinement du spectre de diffraction des rayons X réalisé avec une cathode de cobalt (représenté sur la figure 14) montre la présence d'une phase unique LiCoSO₄F, dont les paramètres de maille sont comme suit :
a = 5, 1719(6) Å, b = 5, 4192(6) Å, c = 7, 1818(7) Å,
α = 106, 811(7)°, β = 107, 771(7)°, γ = 97, 975 (5) °
V = 177,71(3) Å³.

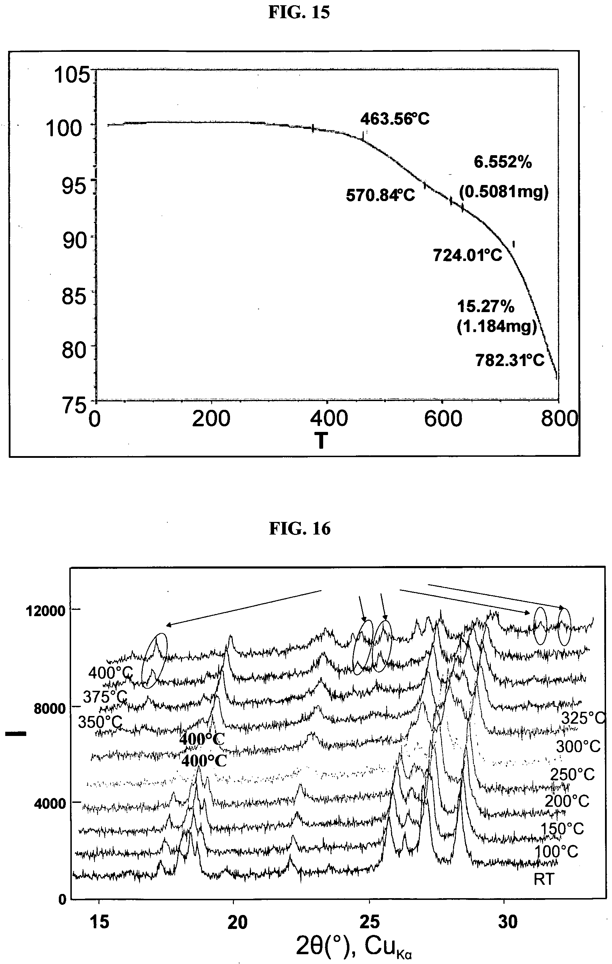

La courbe obtenue par analyse thermogravimétrique est représentée sur la figure 15. Elle montre une perte de poids à partir de 400°C, preuve que le composé LiCoSO₄F est décomposé. Il ne peut donc être obtenu par un procédé en phase solide mettant en oeuvre des températures plus élevées.

Pour confirmer ce fait, un échantillon du produit obtenu dans le présent exemple a été chauffé à l'air pendant 30 minutes comme dans US-2005/0163699. La figure 16 représente l'évolution du diagramme de diffraction des rayons X lors de l'augmentation de la température. RT désigne la température ambiante. Les flèches désignent les zones dans lesquelles se trouvent les pics correspondant à des produits de décomposition. Il apparaît ainsi que le composé commence à se décomposer à 375°C. La mention "RT" portée à droite de la courbe inférieure signifie "température ambiante".

### Exemple 7

### Synthèse de LiNiSO₄F à partir de NiSO₄.H₂O et LiF dans EMI-TFSI

Le monohydrate NiSO₄.H₂O utilisé comme précurseur a été préparé à partir de NiSO₄.7H₂O par chauffage sous vide à 240°C pendant 2 heures.

Dans un flacon en PTFE contenant 5 ml de bis(trifluorométhane-sulfonyl)imide de 1-éthyl-3-méthylimidazolium (EMI-TFSI), on a introduit un mélange de 0,86 g de NiSO₄.H₂O et 0,149 g de LiF (rapport molaire 1/1,13) préparé dans un mortier, on a soumis le mélange à une agitation magnétique pendant 20 minutes à température ambiante, et on a arrêté l'agitation. Le flacon a ensuite été fermé sous argon, et on a maintenu le mélange réactionnel sans agitation à température ambiante pendant 30 minutes. L'ensemble a ensuite été introduit dans un four à 250°C, la température du four a été augmentée jusqu'à 285°C en 2 heures, maintenue à cette valeur pendant 36 heures, puis on a laissé refroidir lentement.

La poudre qui s'est formée au cours du traitement thermique a été séparée du liquide ionique par centrifugation, lavée 3 fois avec 10 ml d'acétate d'éthyle, puis séchée à l'étuve à 60°C.

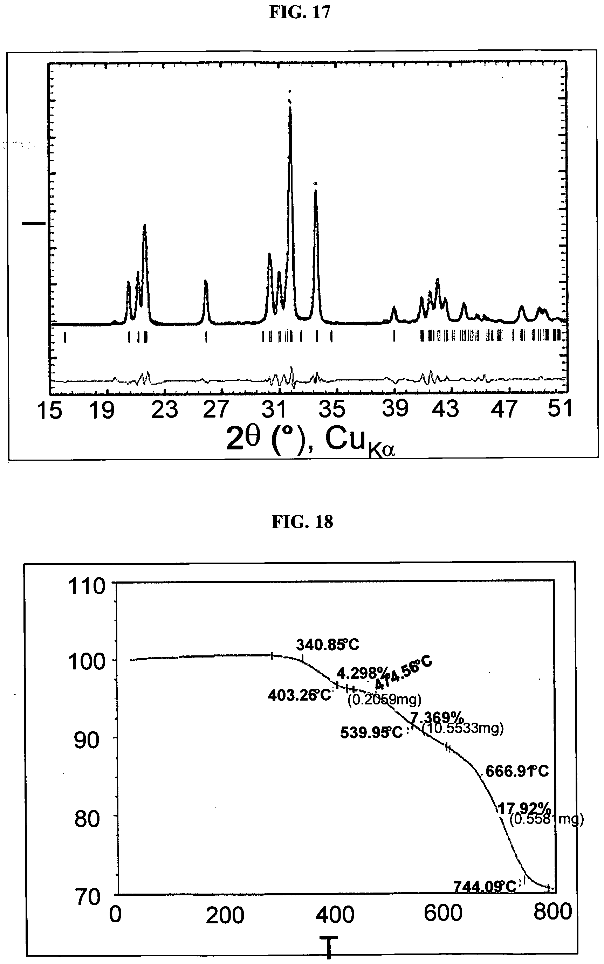

Le diagramme de diffraction des rayons X réalisé avec une cathode de cobalt (représenté sur la figure 17) montre que le composé obtenu contient plus de 90,95% d'une phase analogue à celle de LiFeSO₄F ou LiCoSO₄F. Les paramètres de maille de cette phase sont comme suit :
Triclinique, groupe d'espace : P -1 (2)
   a = 5, 173(1) Å, b = 5, 4209(5) Å, c = 7, 183(1) Å,
   α = 106, 828(9) °, β = 107, 776(8) °, γ = 97, 923 (8) °
   V = 177, 85(5) Å³.

La courbe obtenue par analyse thermogravimétrique est représentée sur la figure 18. Elle montre une perte de poids à partir de 380°C, preuve que le composé LiNiSO₄F est décomposé. Il ne peut donc être obtenu par un procédé en phase solide mettant en oeuvre des températures plus élevées.

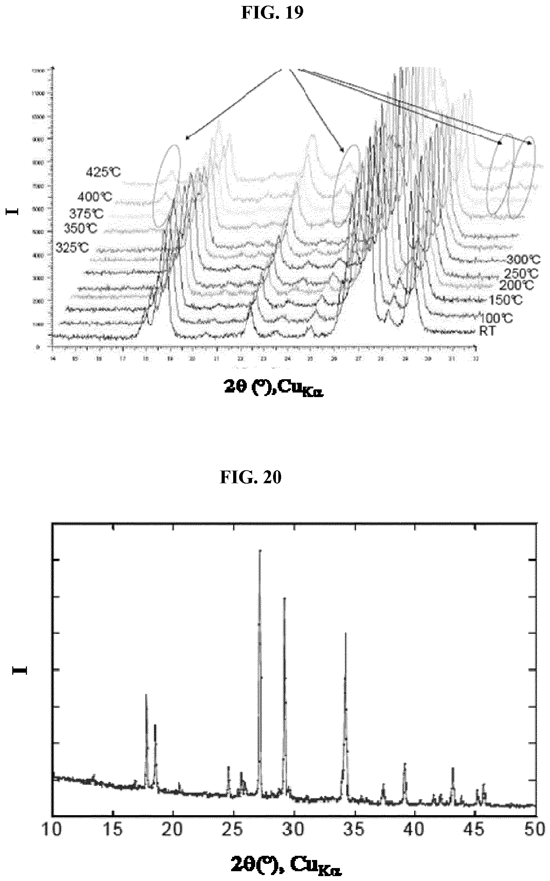

Pour confirmer ce fait, un échantillon du produit obtenu dans le présent exemple a été chauffé à l'air pendant 30 minutes comme dans US-2005/0163699. La figure 19 représente l'évolution du diagramme de diffraction des rayons X lors de l'augmentation de la température. Les flèches désignent les zones dans lesquelles se trouvent les pics correspondant à des produits de décomposition. Il apparaît ainsi que le composé commence à se décomposer à 375°C. La mention "RT" portée à droite de la courbe inférieure signifie "température ambiante".

### Exemple 8

### Solution solide LiFe_{1-y}Mn_{y}SO₄F

Un composé LiFe_{1-y}Mn_{y}SO₄F a été préparé à partir de LiF et d'une solution solide Fe_{1-y}Mn_{y}SO₄. H₂O en tant que précurseur (avec y = b tel que défini dans l'invention, soit 0,25>b≥0).

### Préparation du précurseur

On a dissous 1-y mol de FeSO₄.7H₂O et y mol MnSO₄.H₂O dans 2 ml d'eau préalablement dégazée par l'argon pour éviter l'oxydation de Fe(II), puis on ajouté 20 ml d'éthanol. La poudre qui s'est formée par précipitation lors de l'addition de l'éthanol a été récupérée par centrifugation, lavée 2 fois avec 20 ml d'éthanol, puis chauffée à 200°C sous vide pendant 1heure.

Plusieurs échantillons ont été préparés, en faisant varier la valeur de y, avec y =b tel que défini dans l'invention (i.e. 0,25>b≥0).

### Préparation de la solution solide LiFe_{1-y}Mn_{y}SO₄F

La synthèse a été réalisée par voie ionothermale dans un autoclave à 270°C, pour divers échantillons de précurseurs.

A titre d'exemple le composé LiFe_{0,5}Mn_{0,5}SO₄F ne faisant pas partie de l'invention a été préparée de la façon suivante :
Dans un autoclave contenant 3 ml de bis(trifluorométhanesulfonyl)imide de 1-éthyl-3-méthylimidazolium (EMI-TFSI), on a introduit un mélange de 0,85 g de Fe_{0,5}Mn_{0,5}SO₄.H₂O et 0,149 g de LiF (rapport molaire 1/1,14) préparé dans un mortier, on a soumis le mélange à une agitation magnétique pendant 20 minutes à température ambiante, on a arrêté l'agitation, puis on a ajouté 2 ml de liquide ionique (EMI-TFSI), et on a maintenu le mélange sans agitation à température ambiante pendant 30 minutes. Après fermeture de l'autoclave sous argon, l'ensemble a été introduit dans un four à 200°C, la température du four a été augmentée de 10°C toutes les 20 minutes jusqu'à 270°C, et maintenue à cette valeur pendant 48 heures, puis on a laissé refroidir lentement.

La poudre qui s'est formée au cours du traitement thermique a été séparée du liquide ionique par centrifugation, lavée 3 fois avec 10 ml de dichlorométhane, puis séchée à l'étuve à 60°C.

La diffraction des rayons X montre la formation de solution solide LiFe_{1-y}Mn_{y}SO₄F conforme à l'invention au faibles valeurs de y pour y< 0,1 et la formation de phases mixtes non conformes à l'invention pour les valeurs plus élevées de y pour y> 0,25.

### Exemple 9

### Synthèse de NaFeSO₄F à partir de FeSO₄.7H₂O et de NaF

On introduit dans une bombe Parr® ouverte, un mélange de 5 ml d'EMI-TFSI et de 2,808g de FeSO₄.7H₂O et on chauffe à 230°C. Après 5 h de chauffage, on refroidit le mélange jusqu'à température ambiante, puis on ajoute 0,42 g de NaF avant de fermer la bombe Parr^{®}. Après 10 minutes d'agitation magnétique, le mélange est chauffé à 250°C pendant 24 heures. Après refroidissement à température ambiante, la poudre récupérée est lavée deux fois avec 20 ml d'acétone, puis séchée à l'étuve à 60°C. Le diagramme de diffraction des rayons X, représenté sur la figure 20 montre la formation d'une nouvelle phase ayant une structure de type Tavorite distordue monoclinique ayant le groupe d'espace P2₁/_{C}.

Dans les exemples FeSO₄.H₂O et CoSO₄.H₂O ont été préparés par chauffage sous vide primaire à 200°C pendant 1 heure respectivement de FeSO₄.7H₂O et de CoSO₄.7H₂O.

### Exemple 10

### Synthèse de LiFeS04F.

On a mélangé manuellement dans un mortier 0,850 g de monohydrate FeSO₄.H₂O avec 0,145 g de LiF , ce qui correspond à un excès de 10 % de LiF par rapport aux quantités stoechiométriques. On a pastillé la poudre sous un poids de 10 tonnes, puis on a introduit la pastille dans une bombe Parr que l'on a assemblée dans une boîte sèche en utilisant l'argon comme gaz vecteur. On a ensuite placé la bombe dans un four dont la température a été portée à 280°C en 5 heures et maintenue à cette valeur pendant 60 heures. On a ensuite refroidi le four rapidement, on a récupéré la pastille et on l'a broyée pour la caractériser par XRD.

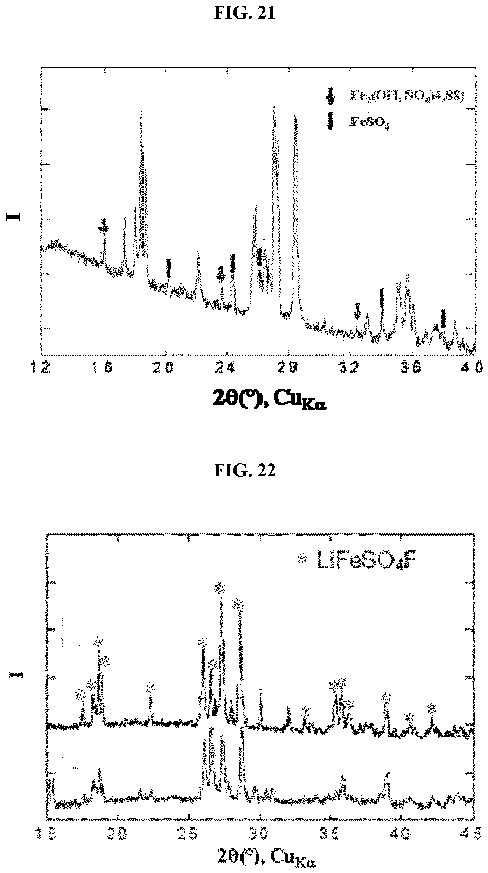

Le diagramme de RX est représenté sur la figure 21. Il montre que le produit obtenu est monophasé à 95%.

### Exemple 11

### Synthèse de LiFeSO₄F à partir de FeSO₄.H₂O et LiF à 280 °C (effet de la pression interne)

On a préparé un mélange de poudres FeSO₄.H₂O / LiF dans un rapport molaire 1/1,14 et on a préparé une pastille en comprimant 1 g de mélange de poudre sous un poids de 10 tonnes. On a introduit la pastille dans une bombe Parr que l'on a assemblée dans une boîte sèche en utilisant l'argon comme gaz vecteur. On a ensuite soumis la bombe Parr à un traitement thermique selon le schéma suivant : 1 h à 250°C, 1 h à 260°C, 1 h à 270°C, 60 h à 280°C, refroidissement lent. On a ensuite refroidi le four rapidement, on a récupéré la pastille et on l'a broyée pour la caractériser par XRD (CuKα).

Ce mode opératoire a été mis en oeuvre d'une part dans une bombe Parr de 25 ml, et d'autre part dans une bombe Parr de 50 ml.

Les diagrammes de RX sont représentés sur la figure 22. La courbe supérieure correspond à la mise en oeuvre dans la bombe Parr de 25 ml, et la courbe inférieure correspond à la mise en oeuvre dans la bombe Parr de 50 ml. Les diagrammes montrent que la formation de la phase LiFeSO₄F caractéristiques des raies identifiées par le signe * et d'impuretés. Le taux d'impuretés est le plus faible dans la bombe de 25 ml, soit d'environ 5%.

### Exemple 12

### Synthèse de LiFeSO₄F à partir de FeSO₄.H₂O et LiF à 290 °C

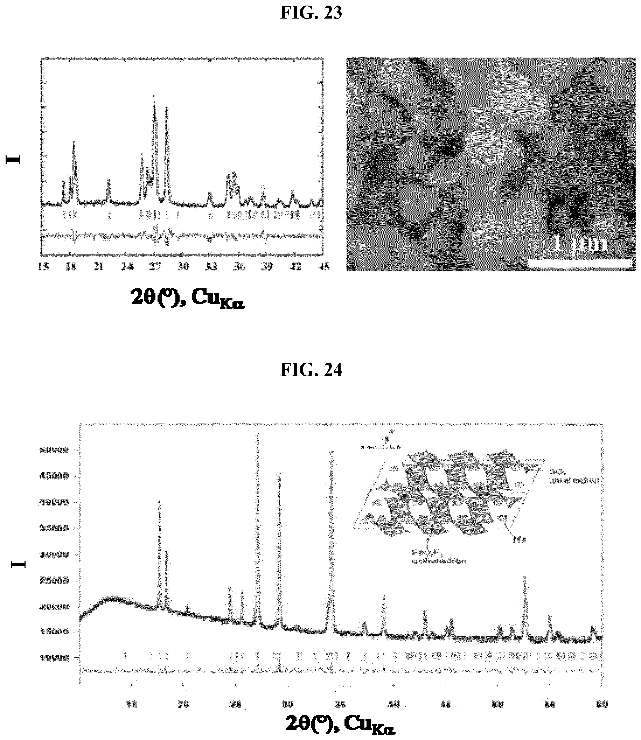

On a On a préparé un mélange de 0,850 g de FeSO₄H₂O et de 0,2 g de LiF par broyage mécanique pendant 10 min dans un broyeur SPEX-800, puis on a pastillé le mélange sous un poids de 10 tonnes et on a placé la pastille obtenue dans une bombe Parr de 25 ml que l'on a fermée sous argon. On a ensuite appliqué le traitement thermique suivant : 1 h à 250°C, 1 h à 260°C, 1 h à 270°C, 48 h à 290°C, refroidissement lent. On a ensuite refroidi le four rapidement, on a récupéré la pastille et on l'a broyée pour la caractériser par XRD (CuKα). La figure 23 représente le diagramme de diffraction RX (partie de gauche) et une photo de microscopie électronique à balayage (partie de droite). Le diagramme de DRX montre la formation d'une phase pure LiFeSO₄F, cristallisée dans une maille triclinique, de groupe d'espace P⁻¹, avec les paramètres les maille suivants : a= 5,1865(11) (Å), b= 5,4863(9) (Å), c= 7,2326(12) (Å), α =106,49(1), β= 107,153(9), γ= 97,888 (8), et un volume V= 182,99(6) Å³. La photo de microscopie électronique à balayage montre des agglomérats de petites particules nanométriques très variées en taille (400 nm à 800 nm).

### Exemple 13

### Synthèse de NaFeSO₄F

On a mélangé manuellement dans un mortier 0,850 mg de monohydrate FeSO₄.H₂O avec 24545 mg de NaF, ce qui correspond à un excès de 10 % de NaF par rapport aux quantités stoechiométriques. On a pastillé la poudre sous une pression de 10000 PSI, puis on a introduit la pastille dans une bombe Parr que l'on a assemblée dans une boîte sèche en utilisant l'argon comme gaz vecteur. On a ensuite placé la bombe dans un four dont la température a été portée à 290°C en 5 heures et maintenue à cette valeur pendant 80 heures. On a ensuite refroidi le four rapidement, on a récupéré la pastille et on l'a broyée pour la caractériser par XRD. Le diagramme RX est représenté sur la figure 24. Il montre que le composé obtenu est NaFeSO₄F et cristallise dans une maille monoclinique (groupe d'espace P2_{1/C}) avec les paramètres suivants a = 6,6798(2) (Å), b = 8,7061(2) (Å), c = 7,19124(18) (Å), b = 113,517(2) (Å) et V = 383,473 (Å³).

### Exemple 14

### Synthèse de NaCoSO4F.

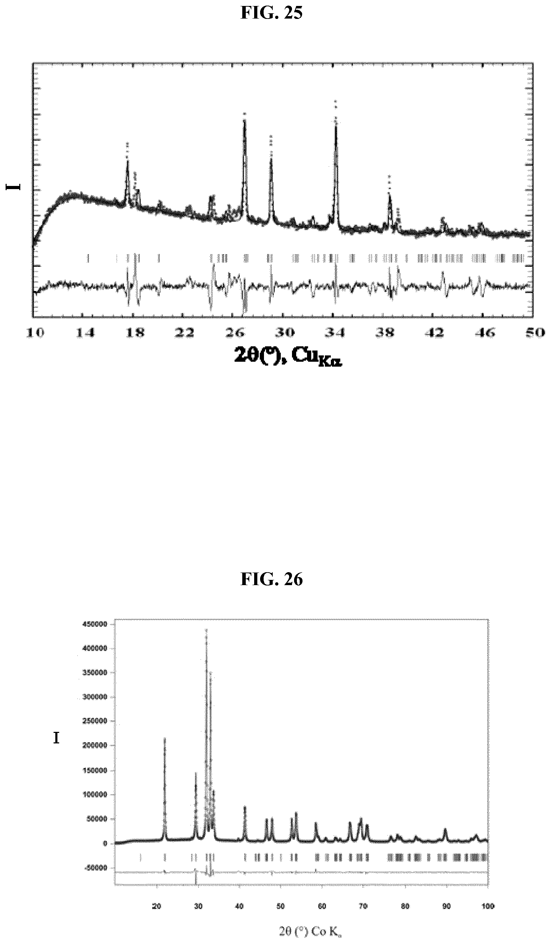

On a mélangé manuellement dans un mortier 0,855 mg de monohydrate CoSO₄.H₂O avec 245 mg de NaF, ce qui correspond à un excès de 10 % de NaF par rapport aux quantités stoechiométriques. On a pastillé la poudre sous une pression de 10000 PSI, puis on a introduit la pastille dans une bombe Parr que l'on a assemblée dans une boîte sèche en utilisant l'argon comme gaz vecteur. On a ensuite placé la bombe dans un four dont la température a été portée à 300°C en 5 heures et maintenue à cette valeur pendant une semaine. On a ensuite refroidi le four rapidement, on a récupéré la pastille et on l'a broyée pour la caractériser par XRD. Le diagramme RX est représenté sur la figure 25. Il montre la présence majoritaire de la phase NCoSO₄F qui cristallise dans le groupe d'espace P21/c avec les paramètres de maille a = 6,645(2)Å, b = 8,825(2) Å, c = 7,162(2) Å, β = 112,73(3) ° et V= V= 387,38(3) Å³.

### Exemple 15

### Préparation de FeSO₄F

Le composé est préparé par délithiation chimique de LiFeSO₄F avec NO₂OF₄ dans l'acétonitrile à température ambiante. Le spectre de diffraction des rayons X représenté sur la figure 26 montre que le composé se cristallise dans une maille dont les paramètres sont :
Triclinique, groupe d'espace : P -1 (2)
   A = 5,0682 Å, b = 5,0649 Å, c = 7.255 Å
   α = 69,36 °, β = 68,80 °, γ = 88,16 °
   V = 161,52 Å³.

### Exemple 18

### Tests électrochimiques

Des échantillons de composé LiFeSO₄F, préparés selon l'exemple 3, ont été testés en tant que matériau d'électrode positive dans une cellule Swagelok dans laquelle l'électrode est un feuillard de lithium, les deux électrodes étant séparées par un séparateur en polypropylène imbibé par une solution 1M de LiPF₆ dans un mélange carbonate d'éthylène/carbonate de diméthyle EC-DMC 1/1. Pour l'élaboration d'une électrode positive, on a mélangé 80 mg de LiFeSO₄F (sous forme de particules ayant un diamètre moyen de 1 µm) et 20 mg de carbone par broyage mécanique dans un broyeur SPEX 1800 pendant 15 minutes. On a appliqué sur un collecteur de courant en aluminium, une quantité de mélange correspondant à 8 mg de LiFeSO₄F par cm².

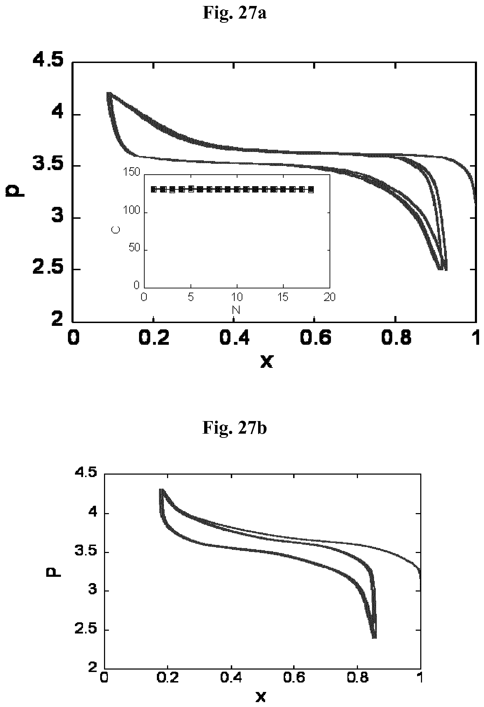

Sur la figure 27a, la courbe principale représente la variation du potentiel en fonction du taux d'insertion du lithium, lors du cyclage de la cellule à un régime de C/10, et l'insert représente l'évolution de la capacité d'une cellule lors de la succession de cycles à un régime de C/10, N étant le nombre de cycles.

La figure 27b représente la variation du potentiel en fonction du taux d'insertion du lithium, lors du cyclage de la cellule à un régime de C/2.

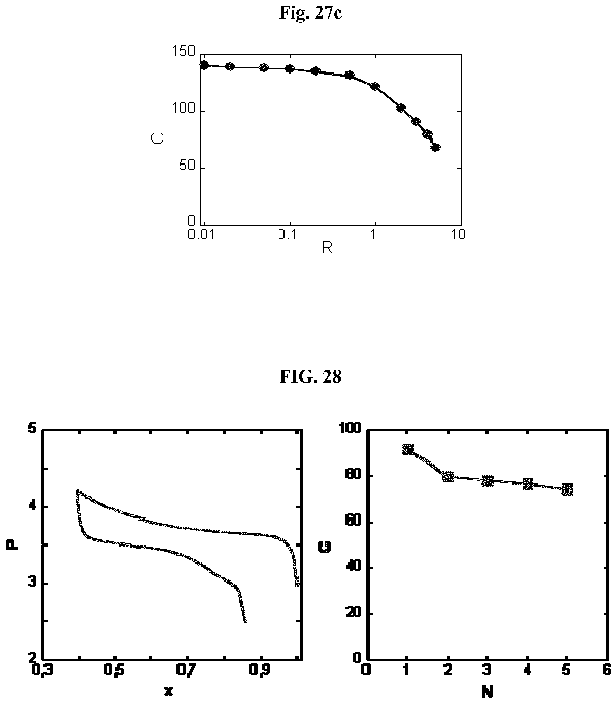

La figure 27c représente la variation de la capacité d'une cellule en fonction du régime de cyclage R.

Il apparaît ainsi que la capacité reste à 90% à un régime de C/2, et à 67% à un régime de C/10.

### Exemple 19

### Test électrochimique

Un échantillon LiFeSO₄F préparé selon l'exemple 12 a été soumis à un test électrochimique. On a préparé un matériau composite LiFeSO₄F (céramique)/ carbone (noir d'acétylène) dans une proportion massique 85/ 15 par broyage mécanique pendant 15 min dans un broyeur SPEX®. On a appliqué ce matériau composite sur un collecteur de courant en aluminium et on l'a montée dans une cellule dans laquelle l'anode négative est un feuillard de lithium et l'électrolyte est un électrolyte commercial de type LP30, On a fait cycler la cellule ainsi obtenue dans la fenêtre de potentiel [2,5 V - 4,5 V] sous un régime de C/5 (1 électron échangé en 5 heures). Les résultats des tests électrochimiques sont représentés sur la figure 28 sur laquelle la courbe de gauche représente la variation du potentiel en fonction de la teneur en ion lithium dans le fluorosulfate, et la courbe de droite représente la variation de la capacité en fonction du nombre de cycles. Il apparaît que l'activité électrochimique de matériau est centrée aux environs de 3,6 V, avec une capacité réversible d'environ 80 mAh/g stable au moins dans les 5 premiers cycles.

### Exemple 20

### Test électrochimique

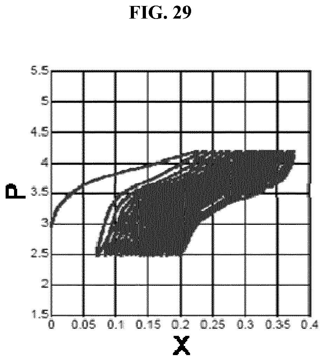

Un échantillon NaFeSO₄F préparé selon l'exemple 13 a été testé dans les conditions de l'exemple 19. La courbe de cyclage est représentée sur la figure 29. Elle montre que le matériau a une activité électrochimique similaire à celle du matériau correspondant préparé en milieu liquide ionique. En particulier, la phase la réactivité vis-à-vis du Li est limitée à 0,2 Li par unité formulaire, quelle que soit le procédé de préparation.

## Revendications

1. Matériau constitué de particules d'un composé fluoré qui a une structure de type Tavorite distordue et qui répond à la formule (I) suivante:
(A₁₋ₐA'ₐ)ₓ(Z_{1-b}Z'_{b})_{z}(SO₄)ₛF_{f} (I)
dans laquelle :
- A représente Li ou Na ;
- A' représente une lacune ou au moins un élément dopant ;
- Z représente au moins un élément choisi parmi Fe, Co, et Ni ;
- Z' représente une lacune ou au moins un élément dopant ;
- les indices a, b, x, z, s, et f sont choisis de manière à assurer l'électro-neutralité du composé, et 0 ≤a<0,25, 0 ≤b<0,25, x≥0, z>0, s>0, f>0 ;
- les quantités respectives a et b de dopant A et Z' sont telles que la structure de type Tavorite est préservée.

2. Matériau selon la revendication 1, **caractérisé en ce que** A est Li et la structure de type Tavorite distordue du composé (I) a une maille triclinique groupe d'espace P-1 ou A est Na et la structure de type Tavorite distordue du composé (I) a une maille monoclinique.

3. Matériau selon la revendication 1, caractérisé ce qu'il est sous la forme de grains dont la dimension est inférieure à 100 µm.

4. Matériau selon la revendication 1, **caractérisé en ce que** A' est un métal alcalin différent de A, un métal alcalino-terreux ou un métal 3d.

5. Matériau selon la revendication 1, **caractérisé en ce que** Z' est un métal choisi parmi les métaux alcalins, Mn, Mg, Ca, Sc, Ti, V, Cr, Zn, Al, Ga, Sn, Zr, Nb et Ta dans au moins un de leurs degrés d'oxydation.

6. Matériau selon la revendication 1, **caractérisé en ce que** le composé fluoré répond à l'une des formules Li(Z_{1-b}Z'_{b})SO₄F et Na(Z_{1-b}Z'_{b})_{z}SO₄F.

7. Matériau selon la revendication 1, **caractérisé en ce que** le composé fluoré répond à la formule (Z_{1-b}Z'_{b})_{z}(SO₄)ₛF_{f}.

8. Procédé de préparation d'un matériau selon la revendication 1, **caractérisé en ce qu'**il comprend les étapes suivantes :
i) la dispersion desdits précurseurs dans un liquide support comprenant au moins un liquide ionique constitué d'un cation et d'un anion dont les charges électriques s'équilibrent, pour obtenir une suspension desdits précurseurs dans ledit liquide,
ii) le chauffage de ladite suspension à une température de 25 à 330°C,
iii) la séparation dudit liquide ionique et de l'oxyde inorganique de formule (I) issu de la réaction entre lesdits précurseurs.

9. Procédé selon la revendication 8, **caractérisé en ce que** la quantité de précurseurs présente au sein du liquide ionique lors de l'étape i) est de 0,01 % à 85 % en masse.

10. Procédé de préparation d'un matériau selon la revendication 1, consistant à mettre en contact des poudres de précurseurs et à soumettre le mélange à un traitement thermique, **caractérisé en ce que** :
- les éléments SO₄, Z et le cas échéant Z' sont apportés par un précurseur unique sous forme de sulfate hydraté ;
- les éléments F, A et le cas échéant A' sont apportés chacun par un fluorure ;
- le traitement thermique est effectué dans un réacteur fermé.

11. Procédé selon la revendication 10, **caractérisé en ce que** le mélange de poudre est pastillé par compression avant d'être introduit dans le réacteur.

12. Procédé selon l'une des revendications 8 ou 10, **caractérisé en ce que** le précurseur de Li est choisi parmi les sels d'acides inorganiques; les sels d'acides organiques volatils, les sels d'acides décomposables à chaud, les fluorures, et les sulfates.

13. Procédé selon l'une des revendications 8 ou 10, **caractérisé en ce que** le précurseur d'un élément Z ou Z' est choisi parmi les sulfates et/ou les phosphates de Z qui présentent une structure de type Tavorite.

14. Procédé selon l'une des revendications 8 ou 10, **caractérisé en ce que** le précurseur de Z et le cas échéant de Z' est un monohydrate ZSO₄.H₂O ou Z'SO₄.H₂O ou un monohydrate mixte Z_{1-b}Z'_{b}SO₄.H₂O, et le précurseur de A et le cas échéant de A' est un fluorure.

15. Electrode comprenant une matière active sur un collecteur de courant, **caractérisée en ce que** la matière active est un matériau selon la revendication 1.

16. Cellule électrochimique comprenant une électrode positive et une électrode négative séparées par un électrolyte, **caractérisée en ce que** l'électrode positive est une électrode selon la revendication 15.

## Patentansprüche

1. Material, gebildet aus Partikeln einer fluoridierten Verbindung, die eine Struktur vom Typ verzerrtes Tavorit hat und die der folgenden Formel (I) entspricht:
(A₁₋ₐA'ₐ)ₓ(Z_{1-b}Z'_{b})_{z}(SO₄)ₛF_{f} (I)
wobei:
- A Li oder Na darstellt,
- A' eine Lücke oder mindestens ein dotierendes Element darstellt,
- Z mindestens ein aus Fe, Co und Ni ausgewähltes Element darstellt,
- Z' eine Lücke oder mindestens ein dotierendes Element darstellt,
- die Indizes a, b, x, z, s und f derart ausgewählt sind, dass die Elektroneutralität der Verbindung gesichert ist, und 0 ≤ a < 0,25, 0 ≤ b < 0,25, x ≥ 0, z > 0, s > 0, f > 0 ist,
- die jeweiligen Mengen a und b des Dotierungsmittels A und Z' derart sind, dass die Struktur vom Typ Tavorit erhalten bleibt.

2. Material nach Anspruch 1, **dadurch gekennzeichnet, dass** A Li ist und die Struktur vom Typ verzerrtes Tavorit der Verbindung (I) eine triklinische Masche Raumgruppe P-1 hat, oder A Na ist und die Struktur vom Typ verzerrtes Tavorit der Verbindung (I) eine monoklinische Masche hat.

3. Material nach Anspruch 1, **dadurch gekennzeichnet, dass** es in Form von Körnern ist, deren Größe kleiner als 100 µm ist.

4. Material nach Anspruch 1, **dadurch gekennzeichnet, dass** A' ein alkalisches Metall unterschiedlich von A, ein erdalkalisches Metall oder ein 3d-Metall ist.

5. Material nach Anspruch 1, **dadurch gekennzeichnet, dass** Z' ein Metall ist, ausgewählt aus den alkalischen Metallen, Mn, Mg, Ca, Sc, Ti, V, Cr, Zn, Al, Ga, Sn, Zr, Nb und Ta in mindestens einer ihrer Oxidationsstufen.

6. Material nach Anspruch 1, **dadurch gekennzeichnet, dass** die Fluoridverbindung einer der Formeln Li(Z_{1-b}Z'_{b})SO₄F und Na(Z_{1-b}Z'_{b})_{z}SO₄F entspricht.

7. Material nach Anspruch 1, **dadurch gekennzeichnet, dass** die fluoridierte Verbindung der Formel (Z_{1-b}Z'_{b})_{z}(SO₄)ₛF_{f} entspricht.

8. Verfahren zur Herstellung eines Materials nach Anspruch 1, **dadurch gekennzeichnet, dass** es die folgenden Schritte umfasst:
i) das Dispergieren der Vorläufer in einer Trägerflüssigkeit, umfassend mindestens eine ionische Flüssigkeit, gebildet aus einem Kation und einem Anion, deren elektrische Ladungen sich ausgleichen, um eine Suspension der Vorläufer in der Flüssigkeit zu erhalten,
ii) das Erwärmen der Suspension auf eine Temperatur von 25 bis 330 °C,
iii) das Trennen der ionischen Flüssigkeit und des anorganischen Oxids der Formel (I) als Ergebnis der Reaktion zwischen den Vorläufern.

9. Verfahren nach Anspruch 8, **dadurch gekennzeichnet, dass** die Vorläufermenge, enthalten in der ionischen Flüssigkeit bei Schritt i), 0,01 % bis 85 Ma% beträgt.

10. Verfahren zur Herstellung eines Materials nach Anspruch 1, das darin besteht, Vorläuferpulver in Kontakt zu bringen und das Gemisch einer thermischen Behandlung zu unterziehen, **dadurch gekennzeichnet, dass**:
- die Elemente SO₄, Z und gegebenenfalls Z' von einem einzigen Vorläufer in Form von wasserhaltigem Sulfat bereitgestellt werden,
- die Elemente F, A und gegebenenfalls A' jeweils von einem Fluorid bereitgestellt werden,
- die thermische Behandlung in einem geschlossenen Reaktor durchgeführt wird.

11. Verfahren nach Anspruch 10, **dadurch gekennzeichnet, dass** das Pulvergemisch vor dem Einführen in den Reaktor durch Kompression tablettiert wird.

12. Verfahren nach einem der Ansprüche 8 oder 10, **dadurch gekennzeichnet, dass** der Vorläufer von Li aus den Salzen anorganischer Säuren, den Salzen flüchtiger organischer Säuren, den Salzen von Säuren, die bei Wärme zersetzbar sind, den Fluoriden und den Sulfaten ausgewählt ist.

13. Verfahren nach einem der Ansprüche 8 oder 10, **dadurch gekennzeichnet, dass** der Vorläufer eines Elements Z oder Z' aus den Sulfaten und/oder den Phosphaten von Z ausgewählt ist, die eine Struktur vom Typ Tavorit aufweisen.

14. Verfahren nach einem der Ansprüche 8 oder 10, **dadurch gekennzeichnet, dass** der Vorläufer von Z und gegebenenfalls von Z' ein Monohydrat ZSO₄.H₂O oder Z'SO₄.H₂O oder ein gemischtes Monohydrat Z_{1-b}Z'_{b}SO₄.H₂O ist und der Vorläufer von A und gegebenenfalls von A' ein Fluorid ist.

15. Elektrode, umfassend einen aktiven Stoff auf einem Stromsammler, **dadurch gekennzeichnet, dass** der aktive Stoff ein Material nach Anspruch 1 ist.

16. Elektrochemische Zelle, umfassend eine positive Elektrode und eine negative Elektrode, die durch ein Elektrolyt getrennt sind, **dadurch gekennzeichnet, dass** die positive Elektrode eine Elektrode nach Anspruch 15 ist.

## Claims

1. A material consisting of particles of a fluorinated compound which has a structure of the distorted Tavorite type and which fits the following formula (I):
(A₁₋ₐA'ₐ)ₓ(Z_{1-b}Z'_{b})_{z}(SO₄)ₛF_{f} (I)
wherein:
- A represents Li or Na;
- A' represents a void or at least one doping element;
- Z represents at least one element selected from Fe, Co, and Ni;
- Z' represents a void or at least one doping element;
- the indices a, b, x, z, s, and f, are selected so as to ensure electroneutrality of the compound, and 0≤a<0.25, 0≤b<0.25, x≥0, z>0, s>0, f>0;
- the respective amounts a and b of dopant A and Z' are such that the structure of the Tavorite type is preserved.

2. The material according to claim 1, **characterized in that** A is Li and the distorted structure of the Tavorite type of the compound (1) has a triclinic cell of the space group P-1 wherein A is Na and the distorted structure of the Tavorite type of the compound (1) has a monoclinic cell.

3. The material according to claim 1, **characterized in that** it is in the form of grains, the size of which is less than 100 µm.

4. The material according to claim 1, **characterized in that** A' is an alkaline metal different from A, an earth alkaline metal or a 3d metal.

5. The material according to claim 1, **characterized in that** Z' is a metals selected from among alkaline metals, Mn, Mg, Ca, Sc, Ti, V, Cr, Zn, Al, Ga, Sn, Zr, Nb and Ta, in at least one of their degrees of oxidation.

6. The material according to claim 1, **characterized in that** the fluorinated compound fits one of the formulae Li(Z_{1-b}Z'_{b})SO₄F and Na (Z_{1-b}Z'_{b})_{z}SO₄F.

7. The material according to claim 1, **characterized in that** the fluorinated compound fits the formula (Z_{1-b}Z'_{b})_{z}(SO₄)ₛF_{f}·

8. A method for preparing a material according to claim 1, **characterized in that** it comprises the following steps:
i) dispersion of said precursors in a carrier liquid consisting of a cation and of an anion, the electric charges of which are balanced, in order to obtain a suspension of said precursors in said liquid,
ii) heating of said suspension to a temperature from 25 to 330°C,
iii) separating said ionic liquid and inorganic oxide of formula (I) stemming from the reaction between said precursors.

9. The method according to claim 8, **characterized in that** the amount of precursors present within the ionic liquid during step i) is from 0.01% to 85% by mass.

10. The method for preparing a material according to claim 1, consisting of putting into contact powders of precursors and of subjecting the mixture to a heat treatment, **characterized in that**:
- the elements SO₄, Z and if required Z' are provided by a single precursor as a hydrated sulfate;
- the elements F, A and if required A' are each provided by a fluoride;
- the heat treatment is carried out in a closed reactor.

11. The method according to claim 10, **characterized in that** the powder mixture is tableted by compression before being introduced into the reactor.

12. The method according to one of claims 8 or 10, **characterized in that** the Li precursor is selected from among salts of inorganic acids; salts of volatile organic acids; acid salts which may be decomposed under hot conditions, fluorides and sulfates.

13. The method according to one of claims 8 or 10, **characterized in that** the precursor of Z of an element Z or Z' is selected from among sulfates and/or phosphates of Z which have a structure of the Tavorite type.

14. The method according to one of claims 8 or 10, **characterized in that** the precursor of Z and if required of Z' is a monohydrate ZSO₄.H₂O or Z'SO₄.H₂O or a mixed monohydrate (Z_{1-b}Z'_{b})SO4.H₂O and the precursor of A and if required of A' is a fluoride.

15. An electrode comprising an active material on a current collector, **characterized in that** the active material is a material according to claim 1.

16. An electrochemical cell comprising a positive electrode and a negative electrode separated by an electrolyte, **characterized in that** the positive electrode is an electrode according to claim 15.
